# EUROPEAN PATENT APPLICATION

(11) **EP 4 685 998 A1**
(43) Date of publication of application: **28.01.2026**
(21) Application number: 24792886.4
(22) Date of filing: 28.03.2024
(51) Int. Cl.: H01Q 1/24, H01Q 3/00, H01Q 5/30, H04M 1/02, H04B 1/38, H01Q 1/38, H01Q 1/48, H04B 1/44

(54) **ELECTRONIC DEVICE COMPRISING ANTENNA**

(30) Priority: 18.04.2023 KR 20230050951; 30.05.2023 KR 20230069107
(71) Applicant: Samsung Electronics Co., Ltd., Suwon-si, Gyeonggi-do 16677 (KR)
(72) Inventor: NAM, Hojung, Suwon-si Gyeonggi-do 16677 (KR); SEO, Kyungil, Suwon-si Gyeonggi-do 16677 (KR); KIM, Seunghwan, Suwon-si Gyeonggi-do 16677 (KR); KIM, Jeonghoon, Suwon-si Gyeonggi-do 16677 (KR); KIM, Haeyeon, Suwon-si Gyeonggi-do 16677 (KR); PARK, Sungkoo, Suwon-si Gyeonggi-do 16677 (KR); CHUN, Jaebong, Suwon-si Gyeonggi-do 16677 (KR); HWANG, Soonho, Suwon-si Gyeonggi-do 16677 (KR)
(74) Representative: Gulde & Partner
(86) International application number: PCT/KR2024/004002
(87) International publication number: WO 2024/219700

(57) **Abstract**

An electronic device according to an embodiment comprises: at least one processor; a first housing comprising a first frame comprising a first conductive portion and a second conductive portion; a second housing comprising a second frame comprising a third conductive portion and a fourth conductive portion; a wireless communication circuit configured to transmit or receive signals in a designated frequency band through at least a part of the first conductive portion; a printed circuit board which is positioned in the second housing and comprises a ground portion; and a first switch circuit configured to connect the ground portion and the second frame. The at least one processor is configured to control the first switch circuit on the basis of a state having a higher upward directivity among a first state in which the second frame is electrically separated from the ground portion and a second state in which the second frame is electrically connected to the ground portion.

## Description

### [Technical Field]

The present disclosure relates to an electronic device including an antenna.

### [Background Art]

An electronic device may transmit or receive a signal through an antenna. For example, the electronic device may include a conductive portion positioned in a portion of a periphery of a housing. At least a portion of the conductive portion may operate as an antenna radiator for transmitting and/or receiving a signal by being fed from wireless communication circuitry. For example, the electronic device may transmit a signal within satellite communication frequency band through at least a portion of the conductive portion. Since an orbit of an artificial satellite is positioned upward from the ground, satellite communication performance of the electronic device may be improved, when a radiation pattern formed in the antenna radiator used for satellite communication has upward directivity.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may include at least one processor, a first housing, a second housing, wireless communication circuitry, a printed circuit board, and a first switch circuit. The first housing may include a first frame. The first frame may include a first conductive portion and a second conductive portion spaced apart from the first conductive portion. The second housing may include a second frame. The second frame may include a third conductive portion and a fourth conductive portion spaced apart from the third conductive portion. The second housing may be rotatable with respect to the first housing about a folding axis. The wireless communication circuitry may be configured to receive or transmit a signal on designated frequency band, through at least a portion of the first conducive portion. The printed circuit board may be positioned in the second housing. The printed circuit board may include a ground portion. The first switch circuit may be configured to connect the ground portion and the second frame. The at least one processor may be configured to, while the wireless communication circuitry transmits or receives the signal, control the first switch circuit, based on a state having higher upward directivity, from among a first state in which the second frame is electrically isolated from the ground portion and a second state in which the second frame is electrically connected to the ground portion.

According to an embodiment, an electronic device may include at least one processor, a first housing, a second housing, first wireless communication circuitry, second wireless communication circuitry, a printed circuit board, and a first switch circuit. The first housing may include a first frame. The first frame may include a first conductive portion and a second conductive portion spaced apart from the first conductive portion. The second housing may include a second frame. The second frame may include a third conductive portion and a fourth conductive portion spaced apart from the third conductive portion. The second housing may be rotatable with respect to the first housing about a folding axis. The first wireless communication circuitry may be configured to receive or transmit a first signal on a first frequency band, through at least a portion of the first conducive portion. The second wireless communication circuit may be configured to transmit or receive a second signal on a second frequency band different from the first frequency band, through at least a portion of the second conductive portion. The printed circuit board may be positioned in the second housing. The printed circuit board may include a ground portion. The first switch circuit may be configured to connect the ground portion and the fourth conductive portion. The first conductive portion may face the third conductive portion, in a folded state in which the first housing and the second housing face each other. The second conductive portion may face the fourth conductive portion, in the folded state.

### [Description of the Drawings]

FIG. 1 is a block diagram of an electronic device in a network environment according to an embodiment.
FIG. 2A illustrates an example of an unfolded state of an electronic device according to an exemplary embodiment.
FIG. 2B illustrates an example of a folded state of an electronic device according to an exemplary embodiment.
FIG. 2C is an exploded view of an electronic device according to an exemplary embodiment.
FIG. 3A illustrates an electronic device according to an exemplary embodiment in an unfolded state.
FIG. 3B illustrates an electronic device according to an exemplary embodiment in a folded state.
FIG. 4A schematically illustrates a flow of a current formed in an electronic device in a folded state, in a first state of a first switch circuit.
FIG. 4B schematically illustrates a flow of a current formed in an electronic device in a folded state, in a second state of a first switch circuit.
FIG. 5A illustrates a heat-map indicating a radiation characteristic of an electronic device in a folded state when a first switch circuit is in a first state.
FIG. 5B illustrates a heat-map indicating a radiation characteristic of an electronic device in a folded state when a first switch circuit is in a second state.
FIG. 6A schematically illustrates a first switch circuit.
FIG. 6B illustrates a change in a radiation pattern according to an operation of a first switch circuit.
FIGS. 7A, 7B, 7C, 7D, 7E, and 7F illustrate examples of segmented structures of an electronic device.
FIG. 8A schematically illustrates a flow of a current formed in an electronic device in an unfolded state, in a first state of a first switch circuit.
FIG. 8B schematically illustrates a flow of a current formed in an electronic device in an unfolded state, in a second state of a first switch circuit.
FIG. 9A illustrates a change in a radiation pattern according to an operation of switch circuits in a folded state.
FIG. 9B illustrates a change in a radiation pattern according to an operation of switch circuits in an unfolded state.
FIG. 10A illustrates a folded state of an electronic device according to an exemplary embodiment.
FIG. 10B illustrates a change in a radiation pattern according to an operation of a first switch circuit.
FIG. 11A illustrates a folded state of an electronic device according to an exemplary embodiment.
FIG. 11B illustrates a change in a radiation pattern according to an operation of a first switch circuit.
FIG. 12A illustrates an electronic device and an accessory according to an exemplary embodiment.
FIG. 12B illustrates an exemplary accessory.

### [Mode for Invention]

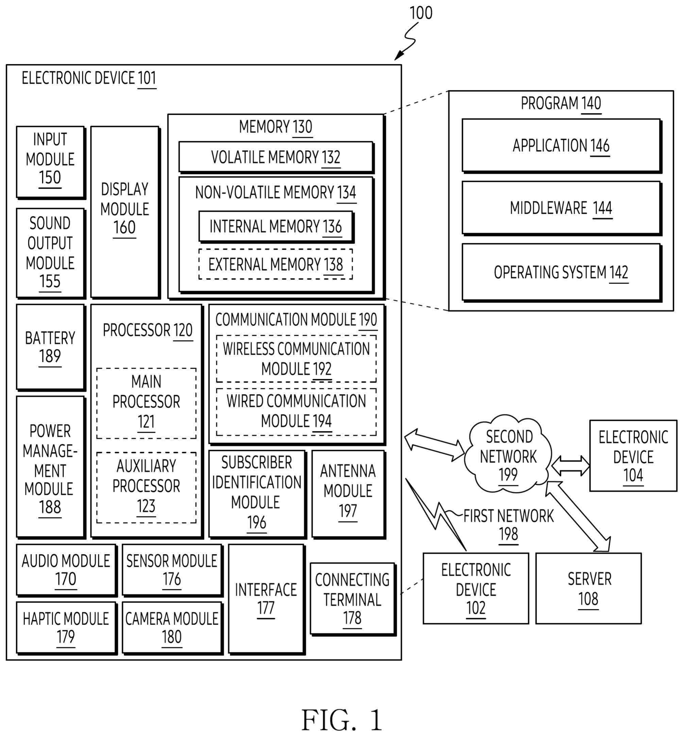

FIG. 1 is a block diagram illustrating an electronic device in a network environment 100 according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

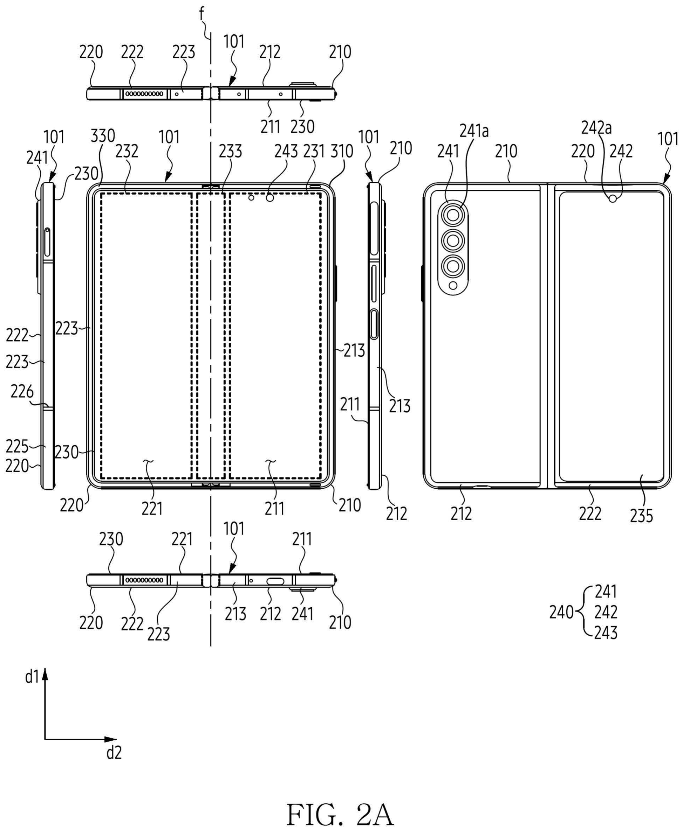

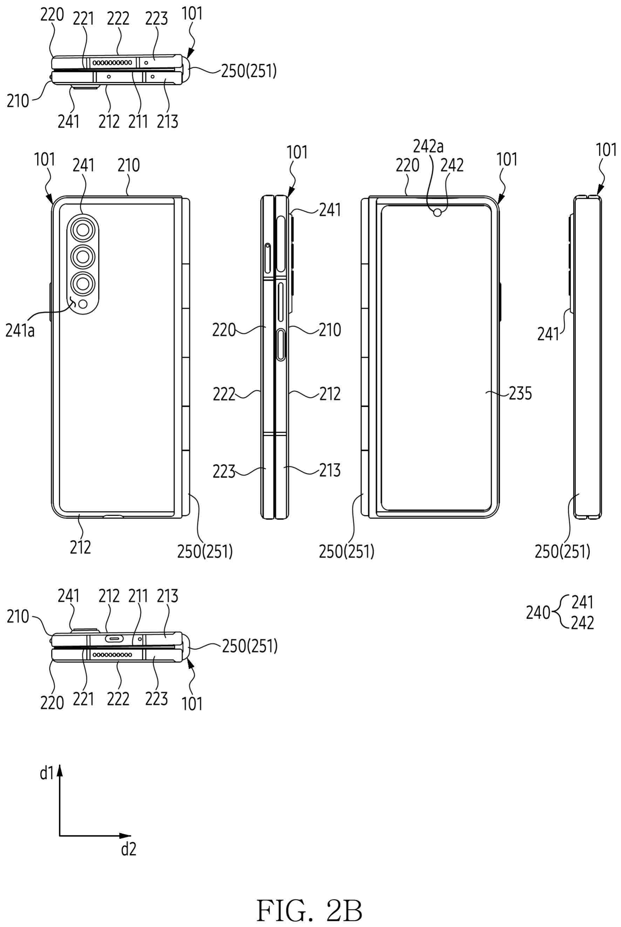

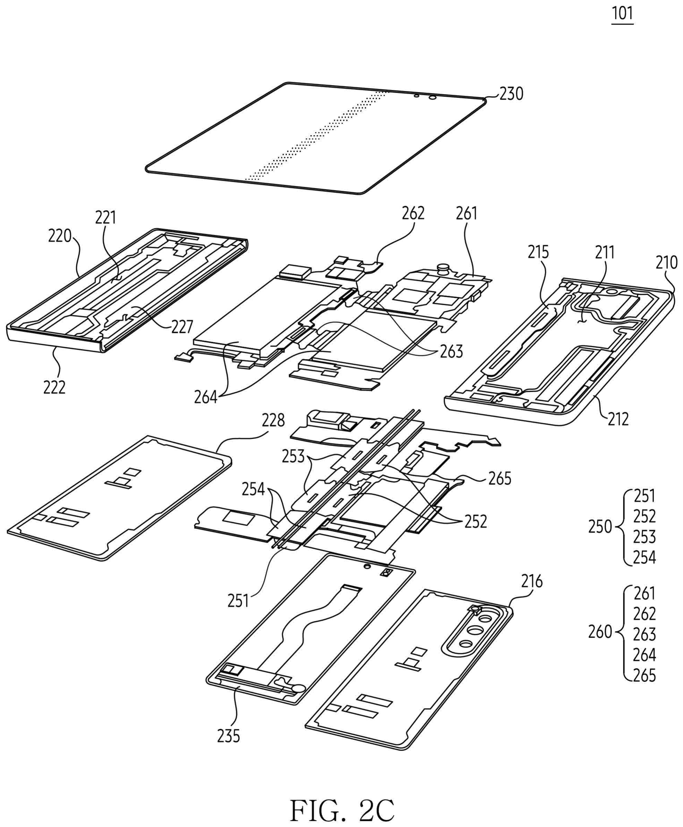

FIG. 2A illustrates an example of an unfolded state of an electronic device according to an embodiment, FIG. 2B illustrates an example of a folded state of an electronic device according to an embodiment, and FIG. 2C is an exploded view of an electronic device according to an embodiment.

Referring to FIGS. 2A, 2B, and 2C, an electronic device 101 (e.g., the electronic device 101 of FIG. 1) may include a first housing 210, a second housing 220, and a display 230 (e.g., the display module 160 of FIG. 1), at least one camera 240, a hinge structure 250, and/or at least one electronic component 260.

According to an embodiment, the first housing 210 and the second housing 220 may form at least a portion of an outer surface of the electronic device 101. For example, the at least a portion of the outer surface of the electronic device 101 defined by the first housing 210 and the second housing 220 may be in contact with a body part of a user when the electronic device 101 is used by the user. According to an embodiment, the first housing 210 may include a first surface 211, a second surface 212 facing the first surface 211 and spaced apart from the first surface 211, and a first side surface 213 surrounding at least a portion of the first surface 211 and the second surface 212. The first side surface 213 may connect a periphery of the first surface 211 to a periphery of the second surface 212. The first surface 211, the second surface 212, and the first side surface 213 may form an inner space of the first housing 210. According to an embodiment, the first housing 210 may provide a space formed by the first surface 211, the second surface 212, and the first side surface 213 as a space for disposing components of the electronic device 101.

According to an embodiment, the second housing 220 may include a third surface 221, a fourth surface 222 facing the third surface 221 and spaced apart from the third surface 221, and a second side surface 223 surrounding at least a portion of the third surface 221 and the fourth surface 222. The second side surface 223 may connect a periphery of the third surface 221 to a periphery of the fourth surface 222. The third surface 221, the fourth surface 222, and the second side surface 223 may form an inner space of the second housing 220. According to an embodiment, the second housing 220 may provide a space formed by the third surface 221, the fourth surface 222, and the second side surface 223 surrounding at least a portion of the third surface 221 and the fourth surface 222 as a space for mounting components of the electronic device 101. According to an embodiment, the second housing 220 may be coupled to the first housing 210 to be rotatable with respect to the first housing 210.

According to an embodiment, the first housing 210 may include a first frame 310 forming the first side surface 213, and the second housing 220 may include a second frame 330 forming the second side surface 223. According to an embodiment, the first frame 310 and the second frame 330 may include at least one conductive portion 225 and at least one non-conductive portion 226. According to an embodiment, a plurality of conductive portions may operate as an antenna radiator. For example, the electronic device 101 may communicate with an external electronic device through the antenna radiator including at least some of the plurality of conductive portions.

According to an embodiment, the display 230 may be configured to display visual information. According to an embodiment, the display 230 may be disposed on the first surface 211 of the first housing 210 and the third surface 221 of the second housing 220 across the hinge structure 250. For example, the display 230 may include a first display area 231 disposed on the first surface 211 of the first housing 210, a second display area 232 disposed on the third surface 221 of the second housing 220, and a third display area 233 disposed between the first display area 231 and the second display area 232. For example, the first display area 231, the second display area 232, and the third display area 233 may form a front surface of the display 230. According to an embodiment, the display 230 may further include a sub-display panel 235 disposed on the fourth surface 222 of the second housing 220. For example, the display 230 may include a flexible display. According to an embodiment, the display 230 may include a window exposed toward the outside of the electronic device 101. The window may protect a surface of the display 230 and transmit visual information provided by the display 230 to the outside of the electronic device 101 by including a substantially transparent material. For example, the window may include glass (e.g., ultra-thin glass (UTG)) and/or polymer (e.g., polyimide (PI)), but is not limited thereto.

The at least one camera 240 may be configured to obtain an image based on receiving light from a subject outside the electronic device 101. According to an embodiment, the at least one camera 240 may include first cameras 241, a second camera 242, or a third camera 243. In an embodiment, the first cameras 241 may be disposed in the first housing 210. For example, the first cameras 241 may be disposed inside the first housing 210, and at least a portion thereof may be visible through the second surface 212 of the first housing 210. The first cameras 241 may be supported by a bracket (not illustrated) in the first housing 210. For example, when the electronic device 101 is viewed from above, the first housing 210 may include at least one opening 241a overlapping the first cameras 241. The first cameras 241 may obtain an image based on receiving light from the outside of the electronic device 101 through the at least one opening 241a.

According to an embodiment, the second camera 242 may be disposed in the second housing 220. For example, the second camera 242 may be disposed inside the second housing 220 and may be visible through the sub-display panel 235. When the electronic device 101 is viewed from above, the second housing 220 may include at least one opening 242a overlapping the second camera 242. The second camera 242 may obtain an image based on receiving light from the outside of the electronic device 101 through the at least one opening 242a.

According to an embodiment, the third camera 243 may be disposed in the first housing 210. For example, the third camera 243 may be disposed inside the first housing 210, and at least a portion thereof may be visible through the first surface 211 of the first housing 210. For another example, the third camera 243 may be disposed inside the first housing 210, and at least a portion thereof may be visible through the first display area 231 of the display 230. When the display 230 is viewed from above, the first display area 231 of the display 230 may include at least one opening overlapping the third camera 243. The third camera 243 may obtain an image based on receiving light from the outside of the display 230 through the at least one opening.

According to an embodiment, the second camera 242 and the third camera 243 may be disposed under the display 230 (e.g., in a direction toward the inside of the first housing 210 or the inside of the second housing 220). For example, the second camera 242 and/or the third camera 243 may be an under display camera (UDC). For example, when the second camera 242 and/or the third camera 243 is the under display camera, an area of the display 230 corresponding to a position of each of the second camera 242 and the third camera 243 may not be an inactive area. The inactive area of the display 230 may mean an area of the display 230 that does not include a pixel or does not emit light to the outside of the electronic device 101. For another example, the second camera 242 and the third camera 243 may be punch hole cameras. When the second camera 242 and the third camera 243 are the punch hole cameras, an area of the display 230 corresponding to the position of each of the second camera 242 and the third camera 243 may be an inactive area.

According to an embodiment, the hinge structure 250 may rotatably connect the first housing 210 and the second housing 220. The hinge structure 250 may be disposed between the first housing 210 and the second housing 220 of the electronic device 101 so that the electronic device 101 may be bent, curved, or folded. For example, the hinge structure 250 may be disposed between a portion of the first side surface 213 and a portion of the second side surface 223 facing each other. The hinge structure 250 may change the electronic device 101 into an unfolded state in which the first surface 211 of the first housing 210 and the third surface 221 of the second housing 220 face each other or a folded state in which the first surface 211 and the third surface 221 face each other. When the electronic device 101 is in the folded state, the first housing 210 and the second housing 220 may be folded or overlapped by facing each other.

According to an embodiment, when the electronic device 101 is in the folded state, a direction in which the first surface 211 faces and a direction in which the third surface 221 faces may be different from each other. For example, when the electronic device 101 is in the folded state, the direction in which the first surface 211 faces and the direction in which the third surface 221 faces may be opposite to each other. For another example, when the electronic device 101 is in the folded state, the direction in which the first surface 211 faces and the direction in which the third surface 221 faces may be inclined with respect to each other. When the direction in which the first surface 211 faces is inclined with respect to the direction in which the third surface 221 faces, the first housing 210 may be inclined with respect to the second housing 220.

According to an embodiment, the electronic device 101 may be foldable about a folding axis f. The folding axis f may mean an imaginary line extending through a hinge cover 251 in a direction (e.g., d1 of FIGS. 2A and 2B) parallel to a longitudinal direction of the electronic device 101, but is not limited thereto. For example, the folding axis f may be an imaginary line extending in a direction (e.g., d2 of FIGS. 2A and 2B) perpendicular to the longitudinal direction of the electronic device 101. When the folding axis f extends in the direction perpendicular to the longitudinal direction of the electronic device 101, the hinge structure 250 may extend in a direction parallel to the folding axis f to connect the first housing 210 and the second housing 220. The first housing 210 and the second housing 220 may be rotatable by the hinge structure 250 extending in the direction perpendicular to the longitudinal direction of the electronic device 101.

According to an embodiment, the hinge structure 250 may include the hinge cover 251, a first hinge plate 252, a second hinge plate 253, and a hinge module 254. The hinge cover 251 may surround internal components of the hinge structure 250 and form an outer surface of the hinge structure 250. According to an embodiment, when the electronic device 101 is in the folded state, at least a portion of the hinge cover 251 surrounding the hinge structure 250 may be exposed to the outside of the electronic device 101 through a space between the first housing 210 and the second housing 220. According to another embodiment, when the electronic device 101 is in the unfolded state, the hinge cover 251 may be covered by the first housing 210 and the second housing 220 and may not be exposed to the outside of the electronic device 101.

According to an embodiment, the first hinge plate 252 and the second hinge plate 253 may rotatably connect the first housing 210 and the second housing 220 by being coupled to the first housing 210 and the second housing 220, respectively. For example, the first hinge plate 252 may be coupled to a first support member 215 of the first housing 210, and the second hinge plate 253 may be coupled to a second support member 227 of the second housing 220. As the first hinge plate 252 and the second hinge plate 253 are coupled to the first support member 215 and the second support member 227, respectively, the first housing 210 and the second housing 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 about the folding axis f by including gears that may be engaged and rotated. According to an embodiment, the hinge modules 254 may be plural. For example, the plurality of hinge modules 254 may be disposed spaced apart from each other at both ends of the first hinge plate 252 and the second hinge plate 253, respectively.

According to an embodiment, the first housing 210 may comprise a first support member 215 and a first cover 216, and the second housing 220 may include the second support member 227 and a second cover 228. The first support member 215 may be disposed inside the first housing 210 and may support components of the electronic device 101. The first cover 216 may cover the second surface 212 of the first housing 210. The second support member 227 may be disposed inside the second housing 220 and may support components of the electronic device 101. The second cover 228 may cover the fourth surface 222 of the second housing 220.

According to an embodiment, a portion of the first support member 215 may be surrounded by the first side surface 213, and a portion of the second support member 227 may be surrounded by the second side surface 223. For example, the first support member 215 may be integrally formed with the first side surface 213, and the second support member 227 may be integrally formed with the second side surface 223. For another example, the first support member 215 may be formed separately from the first side surface 213, and the second support member 227 may be formed separately from the second side surface 223.

At least one electronic component 260 may implement various functions for providing to the user. According to an embodiment, the at least one electronic component 260 may include a first printed circuit board 261, a second printed circuit board 262, a flexible printed circuit board 263, a battery 264, and/or an antenna 265. The first printed circuit board 261 and the second printed circuit board 262 may each form an electrical connection between components in the electronic device 101. For example, components (e.g., the processor 120 of FIG. 1) for implementing overall functions of the electronic device 101 may be disposed on the first printed circuit board 261, and electronic components for implementing partial functions of the first printed circuit board 261 may be disposed on the second printed circuit board 262. For another example, components for operation of the sub-display panel 235 disposed on the fourth surface 222 may be disposed on the second printed circuit board 262.

According to an embodiment, the first printed circuit board 261 may be disposed in the first housing 210. For example, the first printed circuit board 261 may be disposed on a surface of the first support member 215. According to an embodiment, the second printed circuit board 262 may be disposed in the second housing 220. For example, the second printed circuit board 262 may be disposed on a surface of the second support member 227. The flexible printed circuit board 263 may connect the first printed circuit board 261 and the second printed circuit board 262. For example, the flexible printed circuit board 263 may extend from the first printed circuit board 261 to the second printed circuit board 262.

According to an embodiment, the battery 264 may be a device for supplying power to at least one component of the electronic device 101, and may include, for example, a non-rechargeable primary battery, a rechargeable secondary battery, or a fuel cell.

According to an embodiment, the antenna 265 may be configured to receive power or a signal from the outside of the electronic device 101. The antenna 265 may include, for example, a near field communication (NFC) antenna, an antenna module, and/or a magnetic secure transmission (MST) antenna. The antenna 265 may, for example, perform short-range communication with an external device or wirelessly transmit and/or receive power required for charging.

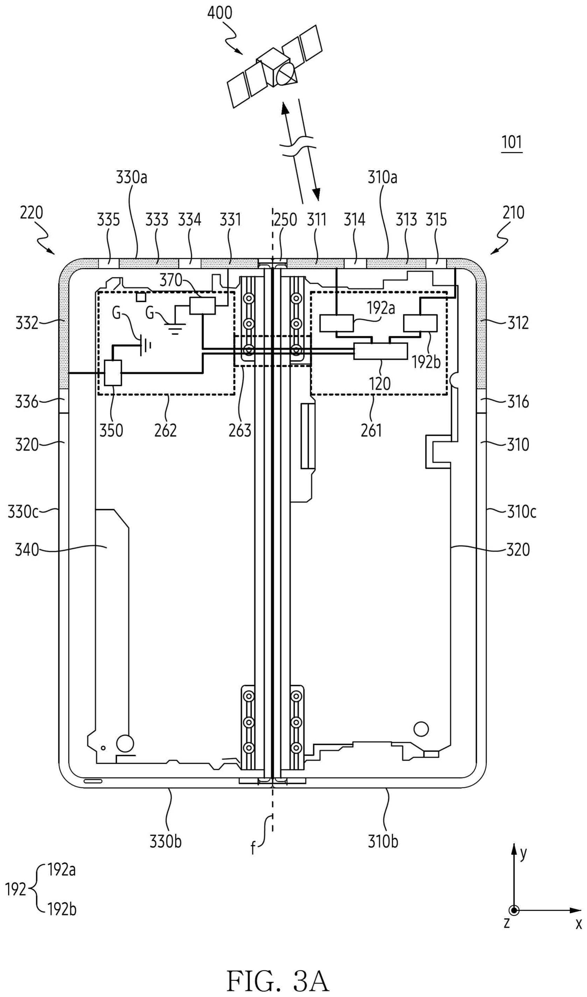

The electronic device 101 according to an embodiment may be configured to wirelessly communicate with various external electronic devices. For example, the external electronic device may include an artificial satellite (e.g., an artificial satellite 400 of FIG. 3A). Since an orbit of the artificial satellite 400 is positioned hundreds to tens of thousands of kilometers above the ground where the electronic device 101 is positioned, a relative position of the artificial satellite 400 with respect to the electronic device 101 may be upward. In the present disclosure, terms indicating the relative position such as "upward," "upper portion," and "top" may be used to indicate a direction in which the electronic device 101 faces the artificial satellite 400. For example, in a state in which the user naturally grips the electronic device 101 to use the electronic device 101, the relative position of the artificial satellite 400 with respect to the electronic device 101 may indicate the upward direction of the electronic device 101. For example, the top of the electronic device 101 may indicate peripheries of the electronic device 101 positioned in the direction toward the artificial satellite 400. For example, the upper portion or an upper hemisphere of the electronic device 101 may indicate an area positioned in an upper portion (e.g., in a +y direction) with respect to an imaginary line passing through centers of long peripheries (e.g., a third periphery 310c and a sixth periphery 330c of FIG. 3A) of the electronic device 101. For example, as upper hemisphere isotropic sensitivity (UHIS) performance of the electronic device 101 is improved when a radiation pattern of an antenna transmitting and/or receiving a signal has upward directivity while the electronic device 101 receives the signal from the artificial satellite 400 or transmits and/or receives the signal to the artificial satellite 400, satellite communication performance may be improved.

The electronic device 1010 according to an embodiment may have a structure capable of steering the radiation pattern of the antenna to have upward directivity in order to improve satellite communication performance. Hereinafter, descriptions of the structure are described with reference to the drawings.

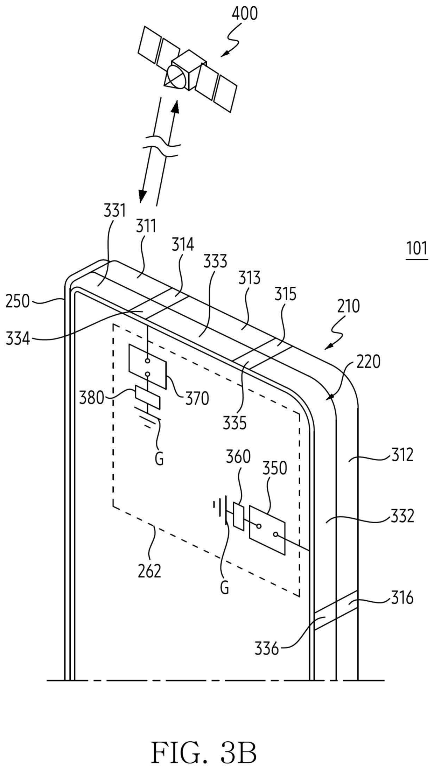

FIG. 3A illustrates an electronic device according to an exemplary embodiment in an unfolded state. FIG. 3B illustrates an electronic device according to an exemplary embodiment in a folded state.

Referring to FIGS. 3A and 3B, an electronic device 101 according to an embodiment may include at least one processor (e.g., the processor 120 of FIG. 1), a first housing 210, a second housing 220, wireless communication circuitry 192, printed circuit boards 261 and 262, a first switch circuit 350, and/or a second switch circuit 370.

According to an embodiment, the at least one processor 120 may cause operation of the electronic device 101 by executing instructions stored in memory (e.g., the memory 130 of FIG. 1). It should be understood that the operation of the electronic device 101 described in the present disclosure may be performed by one or more computer programs including instructions executable by a computer. All of the one or more computer programs may be stored in a single memory, or the one or more computer programs may be divided into different portions stored in different multiple memories. For example, the instructions stored in the memory 130, when executed by the at least one processor 120, may cause the electronic device 101 to control the switch circuit 350 based on a state having higher upward directivity.

Any functions or operation described in the present specification may be processed by the at least one processor 120 (e.g., one processor or a combination of processors). The one processor or the combination of processors, which is circuitry performing processing, may include an application processor (AP, e.g., a central processing unit (CPU)), a communication processor (CP, e.g., a modem), a graphics processing unit (e.g., GPU), a neural processing unit (NPU, e.g., artificial intelligence (AI) chip), a wireless-fidelity (Wi-Fi) chip, a Bluetooth^{™} chip, a global positioning system (GPS) chip, a near field communication (NFC) chip, connectivity chips, a sensor controller, a touch controller, a fingerprint sensor controller, a display drive integrated circuit (DDI), an audio CODEC chip, a universal serial bus (USB) controller, a camera controller, an image processing IC, a microprocessor unit (MPU), a system on a chip (SoC), an IC, or circuitry similar thereof.

The electronic device 101 according to an embodiment may include the first housing 210 and the second housing 220 rotatably connected to each other. The electronic device 101 according to an embodiment may be referred to as the foldable electronic device 101. For example, the second housing 220 may be rotatable with respect to the first housing 210 about a folding axis f. For example, the electronic device 101 may include a hinge structure 250. The hinge structure 250 may switch the electronic device 101 into a folded state or an unfolded state by rotatably connecting the first housing 210 and the second housing 220 about the folding axis f.

For example, the first housing 210 may include a first frame 310 and a first support member 320. The first frame 310 may form an exterior of the first housing 210. The first support member 320 may be positioned in an inner side of the first frame 310. For example, the second housing 220 may include a second frame 330 and a second support member 340. The second frame 330 may form an exterior of the second housing 220. The second support member 340 may be positioned in an inner side of the second frame 330. The first support member 320 may support components (e.g., the first printed circuit board 261) in the first housing 210. The second support member 340 may support components (e.g., the second printed circuit board 262) in the second housing 220.

According to an embodiment, the first frame 310 may include a first periphery 310a, a second periphery 310b, and a third periphery 310c. For example, the first periphery 310a and the third periphery 310c may be perpendicular to the folding axis f, and the second periphery 310b may be parallel to the folding axis f. For example, the first periphery 310a and the second periphery 310b may be opposite to each other. For example, the first periphery 310a may form a periphery in a +y direction (e.g., upward) of the first housing 210. The second periphery 310b may form a periphery in a -y direction (e.g., downward) of the first housing 210. For example, the third periphery 310c may extend from an end of the first periphery 310a to an end of the second periphery 310b. According to an embodiment, a length of the third periphery 310c may be longer than a length of the first periphery 310a and a length of the second periphery 310b.

According to an embodiment, the second frame 330 may include a fourth periphery 330a, a fifth periphery 330b, and a sixth periphery 330c. For example, the fourth periphery 330a and the fifth periphery 330b may be perpendicular to the folding axis f, and the sixth periphery 330c may be parallel to the folding axis f. For example, the fourth periphery 330a and the fifth periphery 330b may be opposite to each other. For example, the fourth periphery 330a may form a periphery in the +y direction (e.g., upward) of the second housing 220. The fifth periphery 330b may form a periphery in the -y direction (e.g., downward) of the first housing 210. For example, the sixth periphery 330c may extend from an end of the fourth periphery 330a to an end of the fifth periphery 330b. According to an embodiment, a length of the sixth periphery 330c may be longer than a length of the fourth periphery 330a and a length of the fifth periphery 330b.

According to an embodiment, the first frame 310 and the second frame 330 may include a plurality of conductive portions and a plurality of non-conductive portions forming a segmented structure. For example, the first frame 310 may include a first conductive portion 311 and a second conductive portion 312 spaced apart from the first conductive portion 311. For example, the second frame 330 may include a third conductive portion 331 and a fourth conductive portion 332 spaced apart from the third conductive portion 331. For example, the first frame 310 may further include a fifth conductive portion 313 disposed between the first conductive portion 311 and the second conductive portion 312. For example, the second frame 330 may further include a sixth conductive portion 333 disposed between the third conductive portion 331 and the fourth conductive portion 332. However, it is not limited thereto.

According to an embodiment, the plurality of conductive portions may be formed along a periphery of the first frame 310 and/or at least one periphery of the second frame 330. For example, the first conductive portion 311 and the fifth conductive portion 313 may be formed along a portion of the first periphery 310a. The first conductive portion 311 and the fifth conductive portion 313 may be spaced apart from each other by a first non-conductive portion 314. For example, the first non-conductive portion 314 may be disposed between the first conductive portion 311 and the second conductive portion 312, and may be in contact with the first conductive portion 311 and the fifth conductive portion 313.

For example, the second conductive portion 312 may be formed along another portion of the first periphery 310a and a portion of the third periphery 310c. The second conductive portion 312 and the fifth conductive portion 313 may be spaced apart from each other by a second non-conductive portion 315. For example, the second non-conductive portion 315 may be disposed closer to the third periphery 310c among the third periphery 310c and the hinge structure 250, in the first periphery 310a. The first non-conductive portion 314 may be disposed closer to the hinge structure 250 among the third periphery 310c and the hinge structure 250, in the first periphery 310a. For example, the second non-conductive portion 315 may be disposed between the second conductive portion 312 and the fifth conductive portion 313, and may contact each of the second conductive portion 312 and the fifth conductive portion 313. For example, an end of the second conductive portion 312 may be in contact with the second non-conductive portion 315 in the first periphery 310a, and another end of the second conductive portion 312 may be in contact with a third non-conductive portion 316 in the third periphery 310c.

For example, the third conductive portion 331 and the sixth conductive portion 333 may be formed along a portion of the fourth periphery 330a. The third conductive portion 331 and the sixth conductive portion 333 may be spaced apart from each other by a fourth non-conductive portion 334. For example, the fourth non-conductive portion 334 may be disposed between the third conductive portion 331 and the sixth conductive portion 333 and may be in contact with each of the third conductive portion 331 and the sixth conductive portion 333.

For example, the fourth conductive portion 332 may be formed along another portion of the fourth periphery 330a and a portion of the sixth periphery 330c. The fourth conductive portion 332 and the sixth conductive portion 333 may be spaced apart from each other by a fifth non-conductive portion 335. For example, the fifth non-conductive portion 335 may be disposed between the fourth conductive portion 332 and the sixth conductive portion 333 and may be in contact with each of the fourth conductive portion 332 and the sixth conductive portion 333. For example, the fourth conductive portion 332 may extend from the fifth non-conductive portion 335 to a sixth non-conductive portion 336 in the sixth periphery 330c.

According to an embodiment, at least a portion of the plurality of conductive portions of the first frame 310 may operate as an antenna radiator capable of transmitting and/or receiving a signal on designated frequency band. For example, the wireless communication circuitry 192 may include first wireless communication circuitry 192a and/or second wireless communication circuitry 192b.

According to an embodiment, the first wireless communication circuitry 192a may be configured to transmit and/or receive a signal on first frequency band through at least a portion of the first conductive portion 311. For example, as the first wireless communication circuitry 192a feeds a first signal on the first frequency band to a feeding point of the first conductive portion 311, the first signal may be transmitted through at least a portion of the first conductive portion 311. The second wireless communication circuitry 192b may be configured to transmit and/or receive a signal on second frequency band different from the first frequency band through at least a portion of the second conductive portion 312. For example, as the second wireless communication circuitry 192b feeds a second signal on the second frequency band to a feeding point of the second conductive portion 312, the second signal may be transmitted through at least a portion of the second conductive portion 312.

According to an embodiment, in the folded state, the first frame 310 and the second frame 330 may face each other. When at least a portion of the first conductive portion 311 and/or at least a portion of the second conductive portion 312 operate as an antenna radiator, radiation efficiency may be deteriorated due to interference by a plurality of conductive portions (e.g., the third conductive portion 331 and the fourth conductive portion 332) of the second frame 330 facing the first conductive portion 311 and the second conductive portion 312 of the first frame 310. According to an embodiment, a segmented structure of the first frame 310 and a segmented structure of the second frame 330 may correspond to each other to reduce the deterioration of the radiation efficiency. The segmented structure of the first frame 310 and the segmented structure of the second frame 330 corresponding to each other may be referred to as the segmented structure of the first frame 310 and the segmented structure of the second frame 330 being symmetrical to each other in the folded state.

Referring to FIG. 3B, when the electronic device 101 is in the folded state, conductive portions (e.g., the first conductive portion 311, the second conductive portion 312, and/or the fifth conductive portion 313) of the first housing 210 may be aligned with conductive portions (e.g., the third conductive portion 331, the fourth conductive portion 332, and/or the sixth conductive portion 333) of the second housing 220. For example, when the electronic device 101 is in the folded state, non-conductive portions (e.g., the first non-conductive portion 314, the second non-conductive portion 315, and/or the third non-conductive portion 316) of the first housing 210 may be aligned with non-conductive portions (e.g., the fourth non-conductive portion 334, the fifth non-conductive portion 335, and/or the sixth non-conductive portion 336) of the second housing 220.

For example, in the folded state, the first conductive portion 311, the second conductive portion 312, and the fifth conductive portion 313 may face the third conductive portion 331, the fourth conductive portion 332, and the sixth conductive portion 333, respectively. For example, in the folded state, the first non-conductive portion 314, the second non-conductive portion 315, and the third non-conductive portion 316 may face the fourth non-conductive portion 334, the fifth non-conductive portion 335, and the sixth non-conductive portion 336, respectively. For example, a length of the first conductive portion 311 may be substantially the same as a length of the third conductive portion 331. For example, a length of the second conductive portion 312 may be substantially the same as a length of the fourth conductive portion 332.

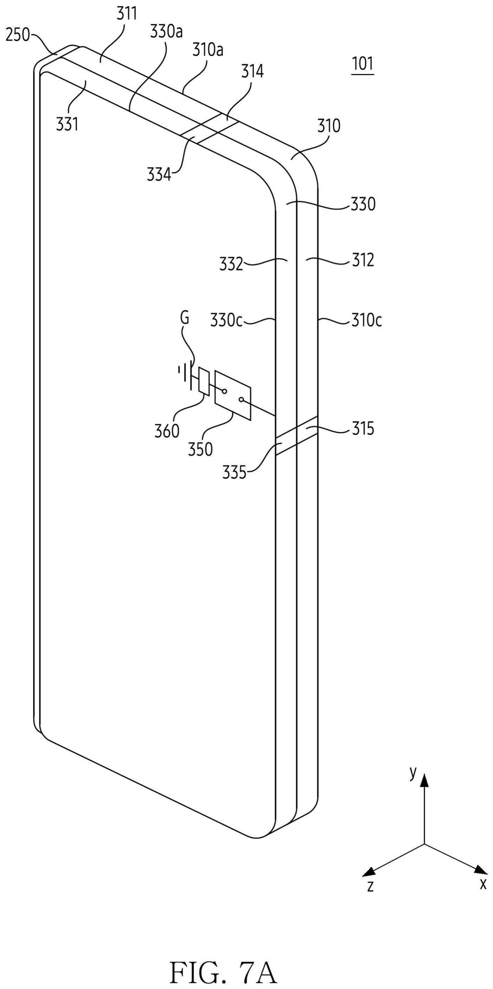

The segmented structures illustrated in FIGS. 3A and 3B are merely exemplary and are not limited thereto. A segmented structure of the electronic device 101 may have various embodiments other than this. Examples of various segmented structures will be described below with reference to FIGS. 7A to 7F.

According to an embodiment, the first frequency band may include satellite communication frequency band. For example, the first frequency band may include satellite communication frequency band used in a non-terrestrial network using only a satellite network without a terrestrial network. For example, in an area where the terrestrial network is not provided, the electronic device 101 may be configured to communicate with an external electronic device (e.g., an artificial satellite 400) through the first signal. For example, the first frequency band may include band of approximately 1.6 GHz, but is not limited thereto. According to an embodiment, second frequency band may include frequency band used in a legacy network. For example, the second frequency band may include low band of approximately 1 GHz or less.

According to an embodiment, the printed circuit boards 261 and 262 may include a plurality of conductive layers and a plurality of non-conductive layers alternately laminated with the plurality of conductive layers. The printed circuit boards 261 and 262 may provide an electrical connection between a plurality of electronic components using wires and conductive vias formed on the conductive layer. For example, the printed circuit boards 261 and 262 may include the first printed circuit board 261 in the first housing 210 and the second printed circuit board 262 in the second housing 220. For example, the electronic device 101 may include a connecting member (e.g., a flexible printed circuit board 263) connecting the first printed circuit board 261 and the second printed circuit board 262.

According to an embodiment, while the first wireless communication circuitry 192a transmits and/or receives the first signal, the at least one processor 120 may be configured to control the first switch circuit 350 to improve upward directivity of a radiation pattern of an antenna including at least a portion of the first conductive portion 311. For example, the second frame 330 and the first switch circuit 350 may be components for steering the radiation pattern. For example, the first switch circuit 350 may be configured to electrically connect the second frame 330 to a ground portion G of the second printed circuit board 262 (e.g., a ground layer of the second printed circuit board 262).

According to an embodiment, a frequency characteristic of a signal transmitted and/or received through an antenna may be determined according to a length of an antenna radiator. The first conductive portion 311 may have a length corresponding to a frequency characteristic (e.g., a resonant frequency) of the first signal, and the second conductive portion 312 may have a length corresponding to a frequency characteristic of the second signal. For example, the frequency characteristic of the first signal may be determined according to a length of an antenna radiator including at least a portion of the first conductive portion 311. For example, when a wavelength corresponding to the resonant frequency of the first signal is w, the length of the first conductive portion 311 may be 1/4 w to 1/2 w. For example, when the resonant frequency of the first signal is approximately 1.6 GHz, a wavelength corresponding to a first resonant frequency may be approximately 185 mm, and the length of the first conductive portion 311 may be approximately 46 mm to approximately 93 mm. For example, a frequency characteristic of the second signal may be determined according to a length of an antenna radiator including at least a portion of the second conductive portion 312. For example, when a wavelength corresponding to a resonant frequency of the second signal is w', the length of the second conductive portion 312 may be 1/4 w' to 1/2 w'. For example, when the resonant frequency of the second signal is approximately 0.8 GHz, a wavelength corresponding to a second resonant frequency may be approximately 374 mm, and the length of the second conductive portion 312 may be approximately 93 mm to approximately 187 mm. According to an embodiment, the length of the first conductive portion 311 may be approximately 46 mm, and the length of the second conductive portion 312 may be approximately 93 mm. However, it is not limited thereto.

According to an embodiment, the length of the second conductive portion 312 may be longer than or equal to the length of the first conductive portion 311. For example, since the first frequency band (e.g., approximately 1.6 GHz) is higher than the second frequency band (e.g., approximately 0.8 GHz), the length of the first conductive portion 311 may be formed shorter than the length of the second conductive portion 312. The length of the fourth conductive portion 332 substantially equal to the length of the second conductive portion 312 may be longer than or equal to the length of the first conductive portion 311 and the length of the third conductive portion 331.

According to an embodiment, the first switch circuit 350 may operate in a first state in which the second frame 330 is electrically isolated from the ground portion G and in a second state in which the second frame 330 is electrically connected to the ground portion G. For example, when the first switch circuit 350 is in the opened first state, the second frame 330 may be electrically isolated from the ground portion G. For example, when the first switch circuit 350 is in the closed second state, the second frame 330 may be electrically connected to the ground portion G.

For example, the at least one processor 120 may be configured to selectively provide an electrical connection between the second frame 330 and the ground portion G by controlling the first switch circuit 350. According to an embodiment, the at least one processor 120 may be configured to control the first switch circuit 350 based on a state having higher upward directivity from among the first state and the second state while the first wireless communication circuitry 192a transmits or receives the first signal through at least a portion of the first conductive portion 311.

For example, in a case that the radiation pattern of the antenna including at least a portion of the first conductive portion 311 has high upward directivity when the second frame 330 and the ground portion G are electrically isolated, the at least one processor 120 may be configured to control the first switch circuit 350 to the first state. For example, in a case that the radiation pattern of the antenna including at least a portion of the first conductive portion 311 has high upward directivity when the second frame 330 and the ground portion G are electrically connected, the at least one processor 120 may be configured to control the first switch circuit 350 to the second state.

According to an embodiment, the first switch circuit 350 may be configured to provide an electrical connection between the fourth conductive portion 332 of the second frame 330 and the ground portion G. Since the length of the fourth conductive portion 332 is longer than or equal to the length of the third conductive portion 331, it may be easy to steer the radiation pattern of the antenna including at least a portion of the first conductive portion 311. As described below, when the second frame 330 and the ground portion G are electrically connected through the first switch circuit 350, a dominant flow of current is formed in a direction perpendicular to the folding axis f, so that a current may be concentrated on a top (e.g., the first periphery 310a and/or the fourth periphery 330a) of the electronic device 101. As the current is concentrated on the top, the radiation pattern of the antenna including at least a portion of the first conductive portion 311 positioned in the first periphery 310a may have high upward directivity. Since the length of the fourth conductive portion 332 is longer than or equal to the length of the third conductive portion 331, a flow of current may be easily controlled when the fourth conductive portion 332 is electrically connected to the ground portion G. A point at which the first switch circuit 350 is connected to the fourth conductive portion 332 is not limited. For example, in FIGS. 3A and 3B, the first switch circuit 350 is illustrated as being adjacent to an end of the fourth conductive portion 332 in contact with the sixth non-conductive portion 336, but is not limited thereto. For example, the first switch circuit 350 may be adjacent to an end of the fourth conductive portion 332 in contact with the fifth non-conductive portion 335.

According to an embodiment, the second switch circuit 370 may be electrically connected to the third conductive portion 331. For example, in the folded state, the third conductive portion 331 may face the first conductive portion 311 that operates as an antenna radiator. For example, the second switch circuit 370 may be configured to adjust a frequency characteristic (e.g., a resonant frequency) of the antenna including at least a portion of the first conductive portion 311 by electrically connecting at least one passive component 380 and the third conductive portion 331.

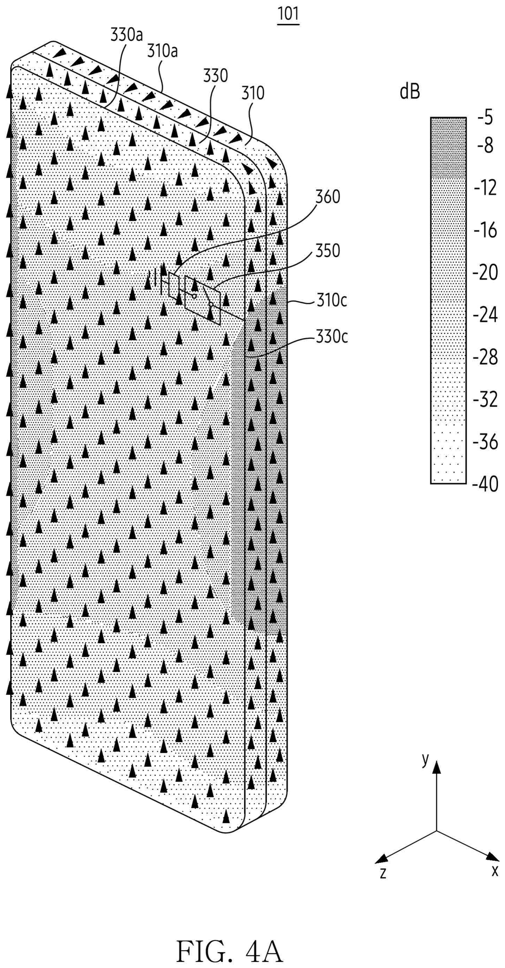

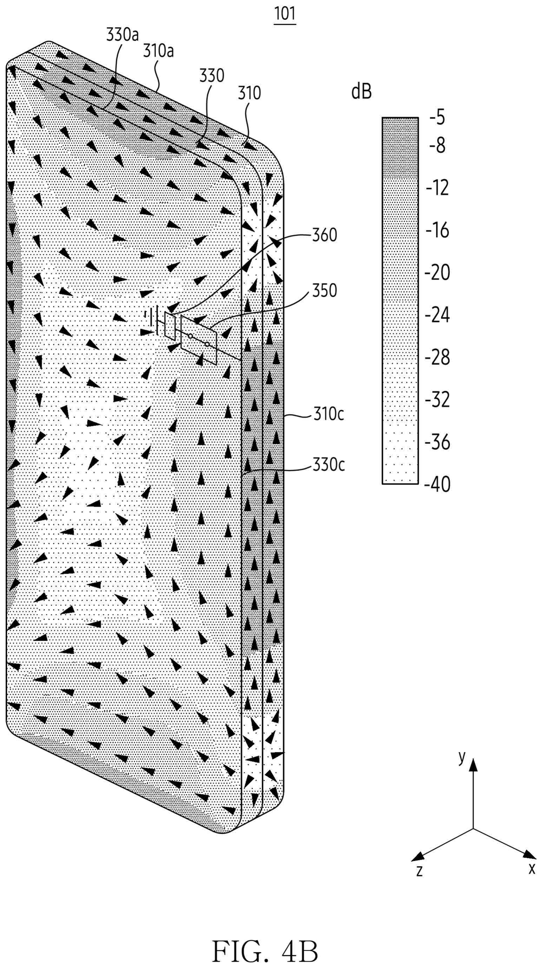

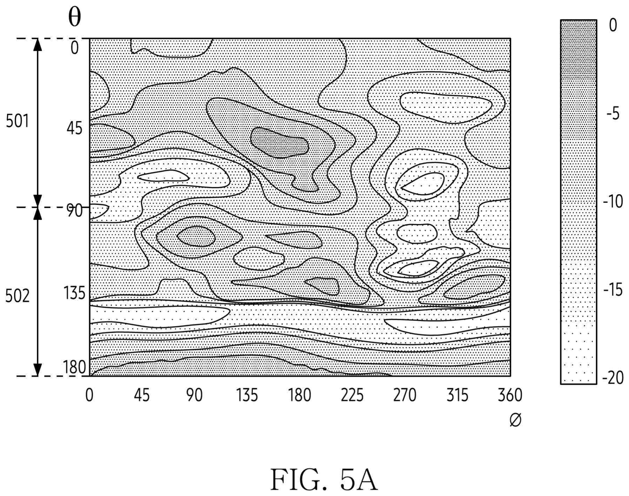

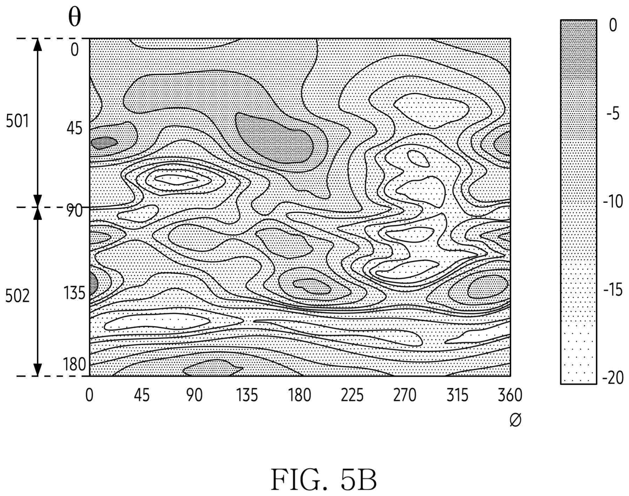

FIG. 4A schematically illustrates a flow of a current formed in an electronic device in a folded state, in a first state of a first switch circuit. FIG. 4B schematically illustrates a flow of a current formed in an electronic device in a folded state, in a second state of a first switch circuit. FIG. 5A illustrates a heat-map indicating a radiation characteristic of an electronic device in a folded state when a first switch circuit is in a first state. FIG. 5B illustrates a heat-map indicating a radiation characteristic of an electronic device in a folded state when a first switch circuit is in a second state.

FIGS. 4A and 4B indicate partial modes among a plurality of modes that may be formed in a structure of an electronic device 101 according to an exemplary embodiment, in a folded state. For example, the plurality of modes may be identified through a characteristic mode analysis. In addition to a mode illustrated in each of FIGS. 4A and 4B, various other modes may be possible, but the mode illustrated in each of FIGS. 4A and 4B may be a mode related to a radiation characteristic of an antenna including a first conductive portion 311.

For example, FIG. 4A illustrates a mode formed according to a first state in which a first switch circuit 350 is opened, in a folded state of the electronic device 101 according to an exemplary embodiment. For example, FIG. 4B illustrates a mode formed according to a second state in which the first switch circuit 350 is closed, in the folded state of the electronic device 101 according to an exemplary embodiment.

Referring to FIG. 4B, in the first state in which the first switch circuit 350 is opened, a second frame 330 and a ground portion G may be electrically isolated. In the first state, a current formed in the electronic device 101 may be formed in a direction substantially parallel to a folding axis f. For example, a dominant flow of current may be formed along a direction substantially parallel to a y-axis.

Referring to FIG. 4B, in the second state in which the first switch circuit 350 is closed, the second frame 330 and the ground portion G may be electrically connected. In the second state, at least one passive component 360 may be electrically connected to an electrical path between the second frame 330 and the ground portion G. In the second state, a current formed in the electronic device 101 may be formed in a direction substantially perpendicular to the folding axis f. For example, a dominant flow of current may be formed along a direction substantially parallel to an x-axis.

Comparing FIGS. 4A and 4B, positions at which a current is concentrated may be different according to states of the first switch circuit 350. For example, as illustrated in FIG. 4A, when the first switch circuit 350 is in the opened first state, a current may be concentrated on a third periphery 310c of a first frame 310 and/or a sixth periphery 330c of the second frame 330. For example, as illustrated in FIG. 4B, when the first switch circuit 350 is in the closed second state, a current may be concentrated on a top (e.g., a first periphery 310a and/or a fourth periphery 330a) of the electronic device 101.

According to an embodiment, since the positions on which the current is concentrated are different according to the state of the first switch circuit 350, directivity of an antenna may change according to the state of the first switch circuit 350. For example, when a first conductive portion (e.g., the first conductive portion 311 of FIG. 3A) capable of transmitting and/or receiving a first signal on satellite communication frequency band is disposed at the first periphery 310a, an antenna including at least a portion of the first conductive portion 311 may have high upward directivity when it is in the second state in which the current is concentrated on the first periphery 310a. While satellite communication is performed through the antenna, at least one processor 120 may be configured to control the first switch circuit 350 based on the second state.

FIGS. 5A and 5B are diagrams indicating a gain of a radiation pattern formed in a three-dimensional space as a heat-map based on an electronic device (e.g., the electronic device 101 of FIG. 3B) in a folded state. For example, an x-axis Φ of the heat-map indicates an azimuth with respect to the electronic device 101 when the electronic device 101 in the folded state is positioned at an origin of a spherical coordinate system. For example, when an x-coordinate is 0 (Φ=0), the heat-map may indicate a gain of a radiation pattern in a direction in which a first support member (e.g., the first support member 320 of FIG. 3A) faces, in the folded state. For example, when the x-coordinate is 90 degrees (Φ = 90), the heat-map may indicate a gain of a radiation pattern in a direction in which a hinge structure (e.g., the hinge structure 250 of FIG. 3A) between a first housing (e.g., the first housing 210 of FIG. 3A) and a second housing (e.g., the second housing 220 of FIG. 3A) faces, in the folded state. For example, when the x-coordinate is 180 degrees (Φ = 180), the heat-map may indicate a gain of a radiation pattern in a direction in which a second support member (e.g., the second support member 340 of FIG. 3A) of the second housing 220 faces, in the folded state. For example, when the x-coordinate is 270 degrees (Φ = 270), the heat-map may indicate a gain of a radiation pattern in a direction in which a third periphery (e.g., the third periphery 310c of FIG. 3A) and a sixth periphery (e.g., the sixth periphery 330c of FIG. 3A) face, in the folded state.

For example, a y-axis θ of the heat-map indicates a polar angle with respect to the electronic device 101 when the electronic device 101 in the folded state is positioned at the origin. For example, a zenith may be referenced to the first periphery 310a of the first housing 210 and/or the fourth periphery 330a, and the polar angle may be referenced as an angle with respect to the zenith. For example, when a y-coordinate is 0 (θ=0), the heat-map may indicate a gain of a radiation pattern with respect to a top (e.g., the first periphery 310a of FIG. 3A) and/or the fourth periphery (e.g., the fourth periphery 330a of FIG. 3A), in the folded state. For example, when the y-coordinate is 90 (θ=90), the heat-map may indicate a gain of a radiation pattern with respect to a center (e.g., between the first periphery 310a and a second periphery 310b of FIG. 3A and/or a center of the fourth periphery 330a and a fifth periphery 330b), in the folded state. For example, when the y-coordinate is 180 (θ=180), the heat-map may indicate a gain of a radiation pattern with respect to the second periphery (e.g., the second periphery 310b of FIG. 3A) and/or the fifth periphery (e.g., the fifth periphery 330b of FIG. 3A) in the folded state. For example, an area 501 in which the - coordinate is 0 to 90 may be referred to as an upper portion or an upper hemisphere of the electronic device 101. When the y-coordinate is 0 to 90, the gain of the radiation pattern may indicate UHIS performance of the electronic device 101. For example, an area 502 in which the y-coordinate is 90 to 180 may be referred to as a lower portion or a lower hemisphere of the electronic device 101.

Table 1 below is a table that numerically displays the heat-maps illustrated in FIGS. 5A and 5B. The first state indicates a first state of a first switch circuit (e.g., the first switch circuit 350 of FIG. 3A), and the second state indicates a second state of the first switch circuit 350. The total efficiency indicates radiation efficiency of the electronic device 101 calculated based on an average value of gains of an entire area of the heat-map. The peak gain indicates the value of the highest gain among the entire area of the heat-map. The upper gain indicates an average value of gains in the area 501 of the heat-map in which the y-coordinate is 0 to 90.

**[Table 1]**

| Parameter | First state | Second state |
|---|---|---|
| Total Efficiency(dB) | -7.38 | -6.6 |
| Peak Gain(dBi) | -2.2 | -1.9 |
| Upper Gain(dBi) | -7.4 | -6.0 |

Referring to the Table 1, as the first switch circuit 350 switches from the first state to the second state, the total efficiency may increase by approximately 0.78 decibel (dB), the peak gain may increase by approximately 0.3 dB isotropic (dBi), and the upper gain may increase by approximately 1.4 dBi. Referring to the Table 1, the electronic device 101 in the folded state may have upward directivity through the first switch circuit 350 in the second state.

For example, as the first switch circuit 350 electrically connects a second frame 330 (e.g., a fourth conductive portion 332) to a ground portion (e.g., the ground portion G of FIG. 3A), a dominant flow of current formed in the electronic device 101 may change from a direction substantially parallel to a folding axis f to a direction substantially perpendicular to the folding axis (e.g., the folding axis f of FIG. 3A). As the dominant flow of current changes, a current may be concentrated on a top (e.g., the first periphery 310a and/or the fourth periphery 330a of FIG. 3A) of the electronic device 101. When the current is concentrated on the top of the electronic device 101, upward directivity of a radiation pattern formed in the electronic device 101 may be improved. For example, as the upper gain of the electronic device 101 increases by approximately 1.4 dBi when the first switch circuit 350 switches from the first state to the second state, satellite communication performance of the electronic device 101 may be improved.

According to an embodiment, at least one processor (e.g., the at least one processor 120 of FIG. 3A) may be configured to control the first switch circuit 350. For example, the at least one processor 120 may be configured to control the first switch circuit 350 based on a state having higher upward directivity from among the first state and the second state, in order to improve the satellite communication performance. For example, the satellite communication performance of the electronic device 101 in the folded state may be improved when the first switch circuit 350 is in the second state. While first wireless communication circuitry 192a transmits and/or receives a signal on satellite frequency band, the at least one processor 120 may be configured to electrically connect the second frame 330 and the ground portion G by controlling the first switch circuit 350 to the second state. For example, the first switch circuit 350 may electrically connect the fourth conductive portion 332 and the ground portion G. When the first switch circuit 350 is in the second state, the current may be concentrated on the top (e.g., the first periphery 310a and/or the fourth periphery 330a) of the electronic device 101 by flowing along the ground. As the current is concentrated on the top of the electronic device 101, the upward directivity of the radiation pattern may be improved. Since the artificial satellite 400 is positioned above the electronic device 101, satellite communication performance of an antenna having upward directivity may be improved.

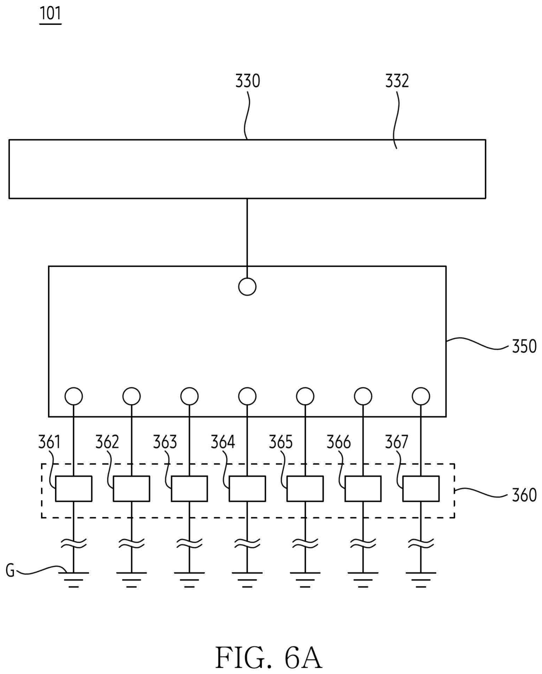

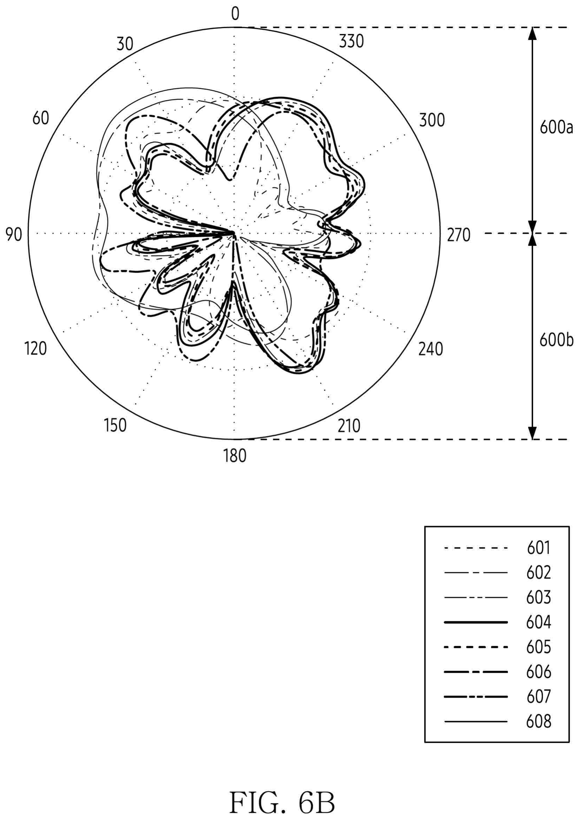

FIG. 6A schematically illustrates a first switch circuit. FIG. 6B illustrates a change in a radiation pattern according to an operation of a first switch circuit.

Referring to FIG. 6A, a first switch circuit 350 may be configured to electrically connect at least one passive component 360 and a second frame 330 to change a radiation pattern.

An electronic device 101 according to an embodiment may include the at least one passive component 360. For example, the at least one passive component 360 may be electrically connected to an electrical path between the second frame 330 and a ground portion G. For example, the at least one passive component 360 may include an inductor and/or a capacitor having a designated parameter value (e.g., inductance or capacitance), but is not limited thereto. For example, the at least one passive component 360 may also include a variable capacitor or a variable inductor having a variable parameter value.

According to an embodiment, for upward directivity of a radiation pattern, the first switch circuit 350 may be configured to electrically connect the at least one passive component 360 to the second frame 330. For example, the first switch circuit 350 may be configured to electrically connect a fourth conductive portion 332 to the at least one passive component 360. The radiation pattern may be changed based on a parameter value of the at least one passive component 360. For example, an impedance value connected to the fourth conductive portion 332 may be determined according to a parameter value of the at least one passive component 360 connected to the first switch circuit 350.

For example, the at least one passive component 360 may include a first passive component 361, a second passive component 362, a third passive component 363, a fourth passive component 364, a fifth passive component 365, a sixth passive component 366, and/or a seventh passive component 367, having different parameter values. For example, the first passive component 361 may be a capacitor having a value of 0.5 pF. For example, the second passive component 362 may be a capacitor having a value of 1 pF. For example, the third passive component 363 may be an inductor having a value of 2.7 nH. For example, the fourth passive component 364 may be an inductor having a value of 3.3 nH. For example, the fifth passive component 365 may be an inductor having a value of 5.6 nH. For example, the sixth passive component 366 may be an inductor having a value of 8.2 nH. For example, the seventh passive component 367 may be a capacitor having a value of 100 pF.

FIG. 6B indicates a radiation pattern according to a change in a parameter value of at least one passive component (e.g., the at least one passive component 360 of FIG. 6A) electrically connected to a fourth conductive portion (e.g., the fourth conductive portion 332 of FIG. 6A). The radiation pattern illustrated in FIG. 6B indicates a radiation pattern according to an azimuth when a polar angle with respect to an electronic device (e.g., the electronic device 101 of FIG. 3A) in a folded state is 90 degrees. For example, FIG. 6B is a diagram illustrating a radiation pattern formed in the electronic device 101 according to the azimuth, when a first supporting member (e.g., the first supporting member 320 of FIG. 3A) of the electronic device 101 in the folded state is viewed from the front. A radiation pattern in a first area 600a of FIG. 6B may be a radiation pattern in an upper portion or an upper hemisphere of the electronic device 101, and a radiation pattern in a second area 600b may be a radiation pattern formed in a lower portion or a lower hemisphere of the electronic device 101.

A first pattern 601 illustrated in FIG. 6B may indicate a radiation pattern of an antenna including at least a portion of a first conductive portion 311, when the fourth conductive portion 332 and the first passive component 361 are electrically connected as the first switch circuit 350 is connected to the first passive component 361. A second pattern 602 may indicate a radiation pattern of the antenna when the first switch circuit 350 is connected to the second passive component 362. A third pattern 603 may indicate a radiation pattern of the antenna when the first switch circuit 350 is connected to the third passive component 363. A fourth pattern 604 may indicate a radiation pattern of the antenna when the first switch circuit 350 is connected to the fourth passive component 364. A fifth pattern 605 may indicate a radiation pattern of the antenna when the first switch circuit 350 is connected to the fifth passive component 365. A sixth pattern 606 may indicate a radiation pattern of the antenna when the first switch circuit 350 is connected to the sixth passive component 366. A seventh pattern 607 may indicate a radiation pattern of the antenna when the first switch circuit 350 is connected to the seventh passive component 367. An eighth pattern may indicate a radiation pattern of the antenna when the first switch circuit 350 is opened.

Referring to FIG. 6B, the radiation pattern may be changed based on a parameter value of the at least one passive component 360 connected to the first switch circuit 350. Referring to radiation patterns in the first area, directivity of a radiation pattern may change as the parameter value changes. For example, according to the parameter value of the at least one passive component 360, an azimuth of a main lobe of a radiation pattern and a gain of the radiation pattern may be changed. According to an embodiment, at least one processor (e.g., the at least one processor 120 of FIG. 3A) may change the at least one passive component 360 connected to the fourth conductive portion 332 by controlling the first switch circuit (e.g., the first switch circuit 350 of FIG. 6A). The at least one processor 120 may be configured to steer a radiation pattern by controlling the first switch circuit 350 in order to improve satellite communication performance of the electronic device 101.

For example, in a situation in which a terrestrial network is not available, the at least one processor 120 may be configured to control the first switch circuit 350 for communication through a non-terrestrial network. For example, in an area where the terrestrial network is not provided, the electronic device 101 may attempt to transmit and/or receive a signal on satellite communication frequency band to use the non-terrestrial network. When a connection between the electronic device 101 and the non-terrestrial network is not smooth, the at least one processor 120 may be configured to electrically connect the at least one passive component 360 and the second frame 330 by controlling the first switch circuit 350. The at least one processor 120 may steer a radiation pattern by changing the at least one passive component 360 connected to the first switch circuit 350, or by changing a variable parameter value of the at least one passive component 360. As illustrated in FIG. 6B, since the radiation pattern changes according to the parameter value of the at least one passive component 360, the at least one processor 120 may change the at least one passive component 360 electrically connected to the second frame 330 by controlling the first switch circuit 350 so that communication using the non-terrestrial network may be smoothly performed.

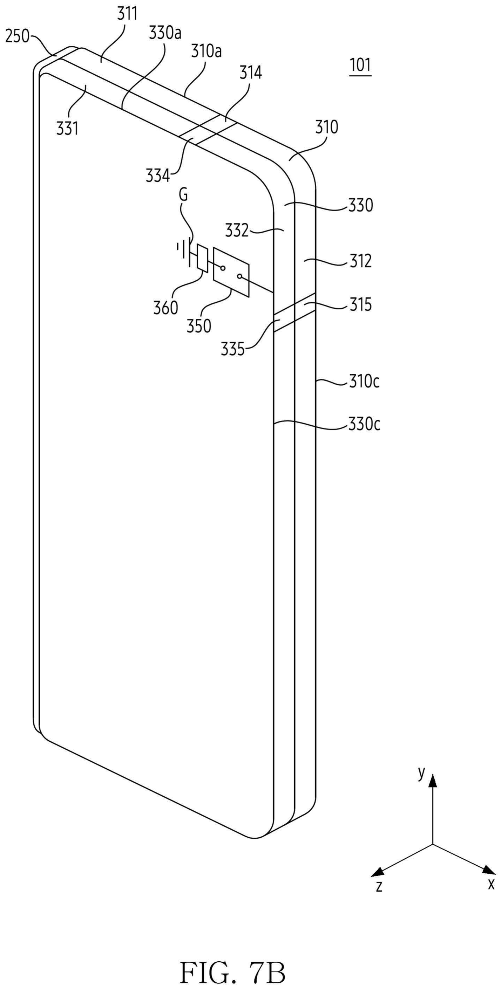

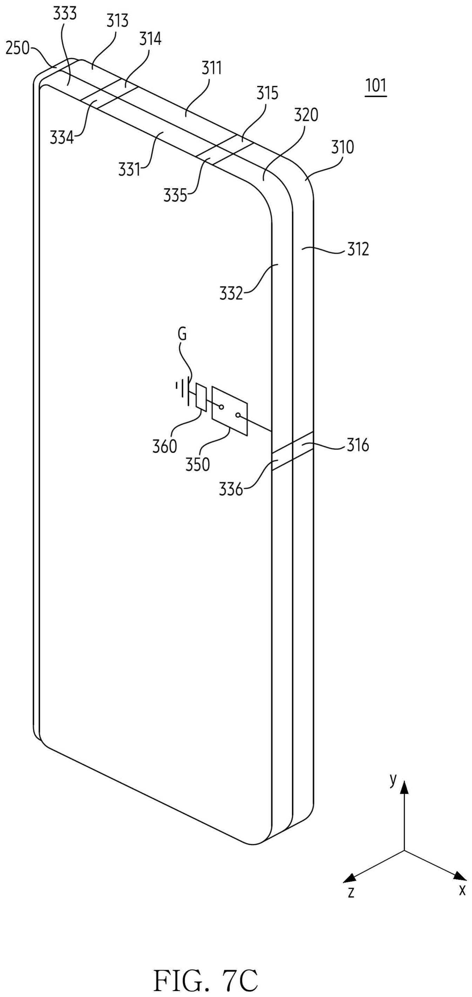

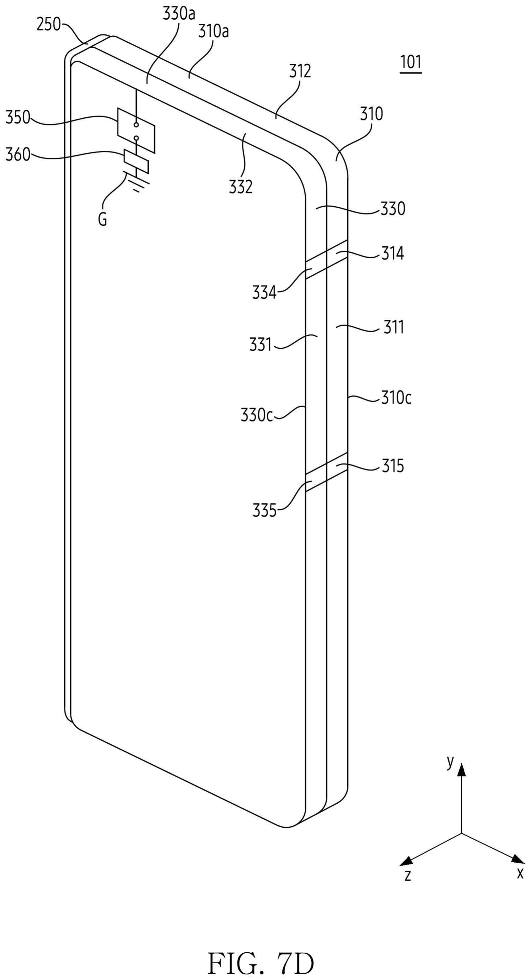

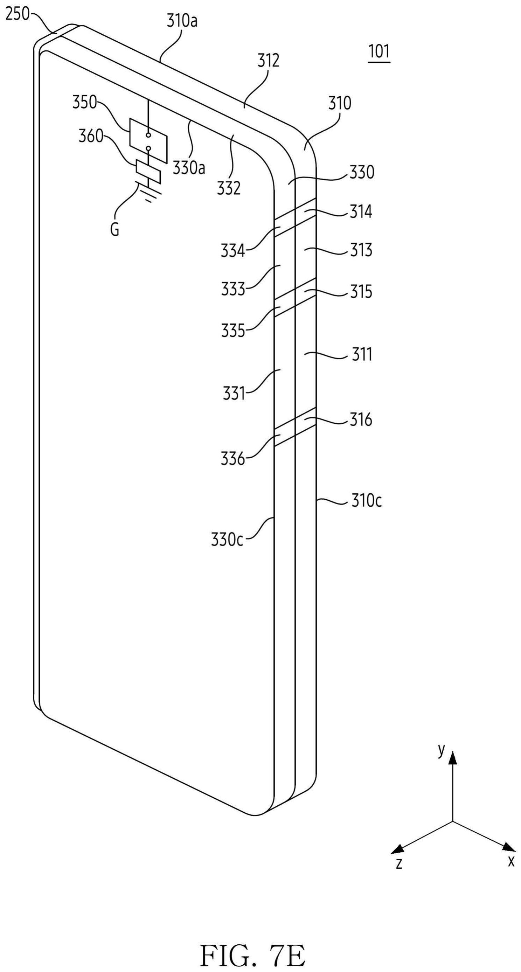

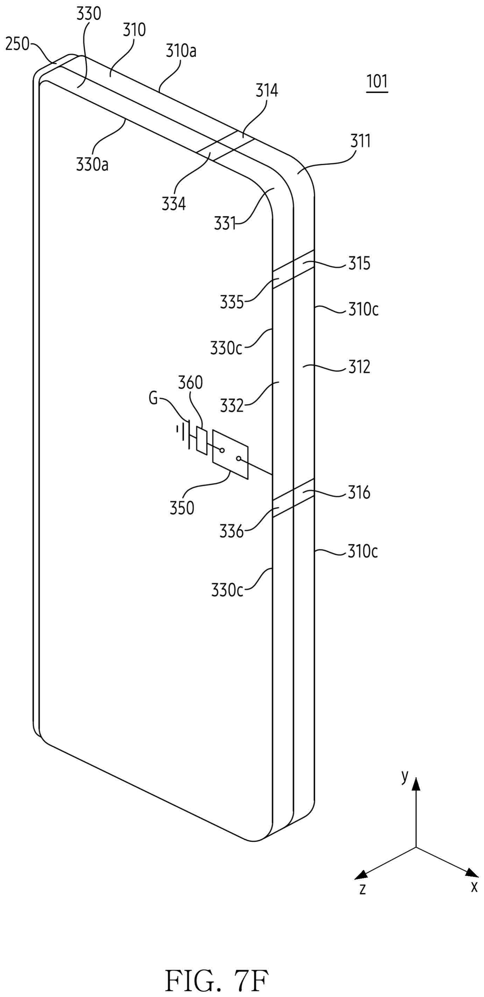

FIGS. 7A, 7B, 7C, 7D, 7E, and 7F illustrate examples of segmented structures of an electronic device.

An electronic device 101 according to an embodiment may include various segmented structures. The segmented structures illustrated in FIGS. 3A and 3B are merely exemplary and are not limited thereto. The electronic device 101 may include various structures for improving satellite communication performance while performing satellite communication.

Each of the electronic devices 101 illustrated in FIGS. 7A to 7F indicates an example of a segmented structure of the electronic device 101 in a folded state. The segmented structures illustrated in FIGS. 7A to 7F may be aligned with each other in the folded state. In FIGS. 7A to 7F, a first conductive portion 311 may operate as an antenna radiator capable of transmitting and/or receiving a signal on first frequency band. For example, the first frequency band may include satellite communication frequency band (e.g., 1.6 GHz). A length of a second conductive portion 312 may be longer than or equal to a length of the first conductive portion 311. For example, when a wavelength corresponding to a resonant frequency of the first signal is w, the length of the first conductive portion 311 may be 1/4 w to 1/2 w. For example, when the resonant frequency of the first signal is approximately 1.6 GHz, a wavelength corresponding to a first resonant frequency may be approximately 185 mm. When the wavelength is approximately 185 mm, 1/4 w may be approximately 46 mm, and 1/2 w may be approximately 93 mm.

Among the above-described descriptions, remaining descriptions except for the segmented structure may be substantially equally applicable to the electronic devices 101 illustrated in FIGS. 7A to 7F, and thus, redundant descriptions may be omitted.

Hereinafter, with reference to FIGS. 7A to 7F, various examples of segmented structures are respectively described.

In a case of the electronic device 101 described with reference to FIGS. 3A and 3B, it has been described that a third conductive portion 331 is disposed between the first conductive portion 311 and the second conductive portion 312, but is not limited thereto. For example, the first conductive portion 311 and the second conductive portion 312 may be disposed with one non-conductive portion therebetween.

Referring to FIG. 7A, a first frame 310 may include a first non-conductive portion 314 disposed at a first periphery 310a and a second non-conductive portion 315 disposed at a third periphery 310c. For example, a second frame 330 may include a fourth non-conductive portion 334 disposed at a fourth periphery 330a and a fifth non-conductive portion 335 disposed at a sixth periphery 330c. In a folded state, the first non-conductive portion 314 may face the fourth non-conductive portion 334, and the second non-conductive portion 315 may face the fifth non-conductive portion 335.

According to an embodiment, the first frame 310 may include a first conductive portion 311 and a second conductive portion 312. For example, the first conductive portion 311 may be formed along a portion of the first periphery 310a. For example, the first conductive portion 311 may be positioned between the first non-conductive portion 314 and a hinge structure 250. For example, the second conductive portion 312 may be formed along another portion of the first periphery 310a and a portion of the third periphery 310c. For example, an end of the second conductive portion 312 may be in contact with the first non-conductive portion 314, and another end of the second conductive portion 312 may be in contact with the second non-conductive portion 315. For example, when a wavelength corresponding to a resonance frequency of a first signal is w, a length of the first conductive portion 311 may be approximately 1/4 w, and a length of the second conductive portion 312 may be approximately 1/2 w.

According to an exemplary embodiment, a second frame 330 may include a third conductive portion 331 and a fourth conductive portion 332. For example, the third conductive portion 331 may be formed along a portion of the fourth periphery 330a. For example, the fourth conductive portion 332 may be formed along another portion of the fourth periphery 330a and a portion of the sixth periphery 330c. For example, the length of the first conductive portion 311 and a length of the third conductive portion 331 may be approximately 46 mm. In the folded state, the third conductive portion 331 may face the first conductive portion 311, and the fourth conductive portion 332 may face the second conductive portion 312. For example, the length of the second conductive portion 312 and a length of the fourth conductive portion 332 may be approximately 93 mm. However, it is not limited thereto.

According to an embodiment, at least one processor (e.g., the at least one processor 120 of FIG. 3A) may be configured to control a first switch circuit 350. For example, the first switch circuit 350 may be configured to selectively provide an electrical connection between the fourth conductive portion 332 and a ground portion G. For example, the at least one processor 120 may be configured to control the first switch circuit 350 based on a state, in which a radiation pattern of an antenna including at least a portion of the first conductive portion 311 has higher upward directivity, from among a first state and a second state. For example, when an electronic device 101 performs satellite communication in a state in which the first periphery 310a and the fourth periphery 330a are positioned to face upward, the at least one processor 120 may control the first switch circuit 350 to the second state. In the second state, as the fourth conductive portion 332 and the ground portion G are electrically connected, a current may be concentrated on a top (e.g., the first periphery 310a and/or the fourth periphery 330a) of the electronic device 101. As the current is concentrated on the top of the electronic device 101, upward directivity of the radiation pattern of the antenna may be improved. Satellite communication performance may be improved by the radiation pattern having high upward directivity.

According to an embodiment, the first switch circuit 350 may be configured to electrically connect the fourth conductive portion 332 and at least one passive component 360. For example, based on a parameter value (e.g., inductance or capacitance) of the at least one passive component 360 electrically connected to the fourth conductive portion 332, the radiation pattern may be steered. The at least one processor 120 may control the first switch so that the fourth conductive portion 332 and the at least one passive component 360 are electrically connected. The at least one processor 120 may be configured to control the first switch circuit 350 to change the at least one passive component 360 electrically connected to the fourth conductive portion 332 in order to steer the radiation pattern. Satellite communication performance may be improved through the steering of the radiation pattern.

Referring to FIG. 7B, a length of a fourth conductive portion 332 for steering a radiation pattern of an antenna including at least a portion of a first conductive portion 311 may be substantially equal to a length of the first conductive portion 311. For example, a second non-conductive portion 315 and a fifth non-conductive portion 335 illustrated in FIG. 7B may be positioned above (e.g., in a +z direction) a second non-conductive portion 315 and a fifth non-conductive portion 335 illustrated in FIG. 7A. For example, when a wavelength corresponding to a resonance frequency of a first signal is w, a length of the first conductive portion 311 may be approximately 1/4 w, and a length of a second conductive portion 312 may be approximately 1/4 w. For example, the length of the first conductive portion 311, the length of the second conductive portion 312, a length of a third conductive portion 331, and the length of the fourth conductive portion 332 may be approximately 43 mm. However, it is not limited thereto.

According to an embodiment, even when the length of the fourth conductive portion 332 is substantially the same as the length of the first conductive portion 311, steering of a radiation pattern by a first switch circuit 350 may be possible. For example, at least one processor 120 may control the first switch circuit 350 to a second state to concentrate a current on a top (e.g., a first periphery 310a and/or a fourth periphery 330a) of an electronic device 101. As the current is concentrated on the top of the electronic device 101, upward directivity of the radiation pattern of the antenna including at least a portion of the first conductive portion 311 may be improved. Satellite communication performance may be improved by the radiation pattern having high upward directivity.

In a case of the electronic device 101 described with reference to FIGS. 3B and 3B, it has been described that the third conductive portion 331 is disposed between the first conductive portion 311 and the second conductive portion 312 used for satellite communication, but is not limited thereto. For example, positions of the first conductive portion 311 and a fifth conductive portion 313 may be exchanged with each other.

Referring to FIG. 7C, a first conductive portion 311 may be in contact with each of a first non-conductive portion 314 and a second non-conductive portion 315. In a folded state, a third conductive portion 331 facing the first conductive portion 311 may be in contact with each of a fourth non-conductive portion 334 and a fifth non-conductive portion 335. At least one processor 120 may steer a radiation pattern of an antenna including at least a portion of the first conductive portion 311 by controlling a first switch circuit 350 electrically connected to a fourth conductive portion 332. For example, when a wavelength corresponding to a resonance frequency of a first signal is w, a length of the first conductive portion 311 may be approximately 1/4 w, and a length of the fourth conductive portion 332 may be approximately 1/2 w. For example, the length of the first conductive portion 311 may be approximately 46 mm. For example, the length of the fourth conductive portion 332 may be approximately 93 mm. However, it is not limited thereto.

Referring to FIG. 7D, a position of a first conductive portion 311 capable of transmitting and/or receiving a first signal is not limited to a top (e.g., a first periphery 310a) of an electronic device 101. For example, the first conductive portion 311 may be formed along a portion of a third periphery 310c.

Referring to FIG. 7D, a first frame 310 may include a first non-conductive portion 314 and a second non-conductive portion 315 disposed at the third periphery 310c. For example, the second non-conductive portion 315 may be spaced apart from the first non-conductive portion 314 in a downward direction (e.g., a -y direction). For example, a second frame 330 may include a fourth non-conductive portion 334 and a sixth non-conductive portion 336 disposed at a sixth periphery 330c. In a folded state, the first non-conductive portion 314 may face the fourth non-conductive portion 334, and the second non-conductive portion 315 may face a fifth non-conductive portion 335.

According to an embodiment, the first frame 310 may include a first conductive portion 311 and a second conductive portion 312. For example, the first conductive portion 311 may be formed along a portion of the third periphery 310c. For example, an end of the first conductive portion 311 may be contact with the first non-conductive portion 314, and another end of the first conductive portion 311 may be contact with the second non-conductive portion 315. For example, the second conductive portion 312 may be formed along another portion of the third periphery 310c and a first periphery 310a.

According to an embodiment, the second frame 330 may include a third conductive portion 331 and a fourth conductive portion 332. For example, the third conductive portion 331 may be formed along a portion of the sixth periphery 330c. For example, the fourth conductive portion 332 may be formed along another portion of the sixth periphery 330c and a portion of a fourth periphery 330a. In the folded state, the third conductive portion 331 may face the first conductive portion 311, and the fourth conductive portion 332 may face the second conductive portion 312. For example, when a wavelength corresponding to a resonance frequency of a first signal is w, a length of the first conductive portion 311 may be approximately 1/4w, and a length of the second conductive portion 312 may be approximately 1/2w. For example, the length of the first conductive portion 311 and a length of the third conductive portion 331 may be approximately 46 mm. For example, the length of the second conductive portion 312 and a length of the fourth conductive portion 332 may be approximately 93 mm. However, it is not limited thereto.

According to an embodiment, a first switch circuit 350 may be configured to selectively provide an electrical connection between the fourth conductive portion 332 and a ground portion G. For example, at least one processor 120 may be configured to control the first switch circuit 350, based on a state, in which a radiation pattern of an antenna including at least a portion of the first conductive portion 311 has higher upward directivity, from among a first state and a second state.

According to an embodiment, the first switch circuit 350 may be configured to electrically connect the fourth conductive portion 332 and at least one passive component 360. For example, based on a parameter value (e.g., inductance or capacitance) of the at least one passive component 360 electrically connected to the fourth conductive portion 332, the radiation pattern may be steered.

Referring to FIG. 7E, when a first conductive portion 311 is formed along a portion of a third periphery 310c, another conductive portion may be disposed between the first conductive portion 311 and a second conductive portion 312.

Referring to FIG. 7E, a first frame 310 may include a first non-conductive portion 314, a second non-conductive portion 315, and a third non-conductive portion 316 disposed at the third periphery 310c. The second non-conductive portion 315 may be disposed between the first non-conductive portion 314 and the third non-conductive portion 316. For example, a second frame 330 may include a fourth non-conductive portion 334, a fifth non-conductive portion 335, and a sixth non-conductive portion 336 disposed at a sixth periphery 330c. In a folded state, the first non-conductive portion 314, the second non-conductive portion 315, and the third non-conductive portion 316 may face the fourth non-conductive portion 334, the fifth non-conductive portion 335, and the sixth non-conductive portion 336, respectively.

According to an embodiment, the first frame 310 may include a first conductive portion 311, a second conductive portion 312, and a fifth conductive portion 313. For example, an end of the first conductive portion 311 may be in contact with the second non-conductive portion 315, and another end of the first conductive portion 311 may be in contact with the third non-conductive portion 316. For example, the second conductive portion 312 may be formed from the first non-conductive portion 314 along the third periphery 310c and a first periphery 310a. For example, an end of the fifth conductive portion 313 may be in contact with the first non-conductive portion 314, and another end of the fifth conductive portion 313 may be in contact with the second non-conductive portion 315.

According to an embodiment, the second frame 330 may include a third conductive portion 331, a fourth conductive portion 332, and a sixth conductive portion 333. In the folded state, the third conductive portion 331, the fourth conductive portion 332, and the sixth conductive portion 333 may face the first conductive portion 311, the second conductive portion 312, and the fifth conductive portion 313, respectively. For example, when a wavelength corresponding to a resonance frequency of a first signal is w, a length of the first conductive portion 311 may be approximately 1/4w, and a length of the second conductive portion 312 may be approximately 1/2w. For example, the length of the first conductive portion 311 and a length of the third conductive portion 331 may be approximately 46 mm. For example, the length of the second conductive portion 312 and a length of the fourth conductive portion 332 may be approximately 93 mm. However, it is not limited thereto.

According to an embodiment, even when another conductive portion (e.g., the fifth conductive portion 313) is disposed between the first conductive portion 311 and the second conductive portion 312, steering of a radiation pattern through a first switch circuit 350 may be possible. For example, the first switch circuit 350 may be configured to selectively provide an electrical connection between the fourth conductive portion 332 and a ground portion G. For example, at least one processor 120 may be configured to control the first switch circuit 350, based on a state, in which a radiation pattern of an antenna including at least a portion of the first conductive portion 311 has higher upward directivity, from among a first state and a second state. For example, based on a parameter value (e.g., inductance or capacitance) of at least one passive component 360 electrically connected to the fourth conductive portion 332, the radiation pattern may be steered.

Referring to FIG. 7F, a first conductive portion 311 capable of transmitting and/or receiving a first signal may be formed across two peripheries of a first frame 310.

Referring to FIG. 7F, the first frame 310 may include a first non-conductive portion 314 disposed at a first periphery 310a, a second non-conductive portion 315, and a third non-conductive portion 316 disposed at a third periphery 310c. For example, a second frame 330 may include a fourth non-conductive portion 334 disposed at a fourth periphery 330a, a fifth non-conductive portion 335, and a sixth non-conductive portion 336 disposed at a sixth periphery 330c. In a folded state, the first non-conductive portion 314, the second non-conductive portion 315, and the third non-conductive portion 316 may face the fourth non-conductive portion 334, the fifth non-conductive portion 335, and the sixth non-conductive portion 336, respectively.

According to an embodiment, the first frame 310 may include the first conductive portion 311 and a second conductive portion 312. For example, the first conductive portion 311 may be formed along a portion of the first periphery 310a and a portion of the third periphery 310c. For example, an end of the first conductive portion 311 may be in contact with the first non-conductive portion 314 in the first periphery 310a, and another end of the first conductive portion 311 may be in contact with the second non-conductive portion 315 in the third periphery 310c. For example, the second conductive portion 312 may be formed along another portion of the third periphery 310c. For example, an end of the second conductive portion 312 may be in contact with the second non-conductive portion 315, and another end of the second conductive portion 312 may be in contact with the third non-conductive portion 316.

According to an embodiment, the second frame 330 may include a third conductive portion 331 and a fourth conductive portion 332. In a folded state, the third conductive portion 331 and the fourth conductive portion 332 may face the first conductive portion 311 and the second conductive portion 312, respectively.

According to an embodiment, a first switch circuit 350 may be configured to selectively provide an electrical connection between the fourth conductive portion 332 and a ground portion G. For example, at least one processor 120 may be configured to control the first switch circuit 350, based on a state, in which a radiation pattern of an antenna including at least a portion of the first conductive portion 311 has higher upward directivity, from among a first state and a second state. For example, based on a parameter value (e.g., inductance or capacitance) of at least one passive component 360 electrically connected to the fourth conductive portion 332, the radiation pattern may be steered.

In addition to the segmented structures illustrated in FIGS. 7A to 7F, various embodiments are possible. At least a portion of the first conductive portion 311 may operate as an antenna radiator capable of transmitting and/or receiving the first signal on satellite communication frequency band. While the first signal is transmitted and/or received through the antenna radiator, the at least one processor 120 may be configured to steer a radiation pattern of an antenna including the antenna radiator by controlling a first switch. For example, the at least one processor 120 may be configured to control the first switch circuit 350 based on a state in which the radiation pattern has high upward directivity. According to an embodiment, even when a segmented structure is changed, the satellite communication performance of the electronic device 101 may be improved through an operation of the first switch circuit 350.

According to an embodiment, at least a portion of the first conductive portion 311 included in the first frame 310 operating as a radiator of an antenna, and at least a portion of the fourth conductive portion 332 of the second frame 330 connected to the first switch circuit 350 may be substantially orthogonal.

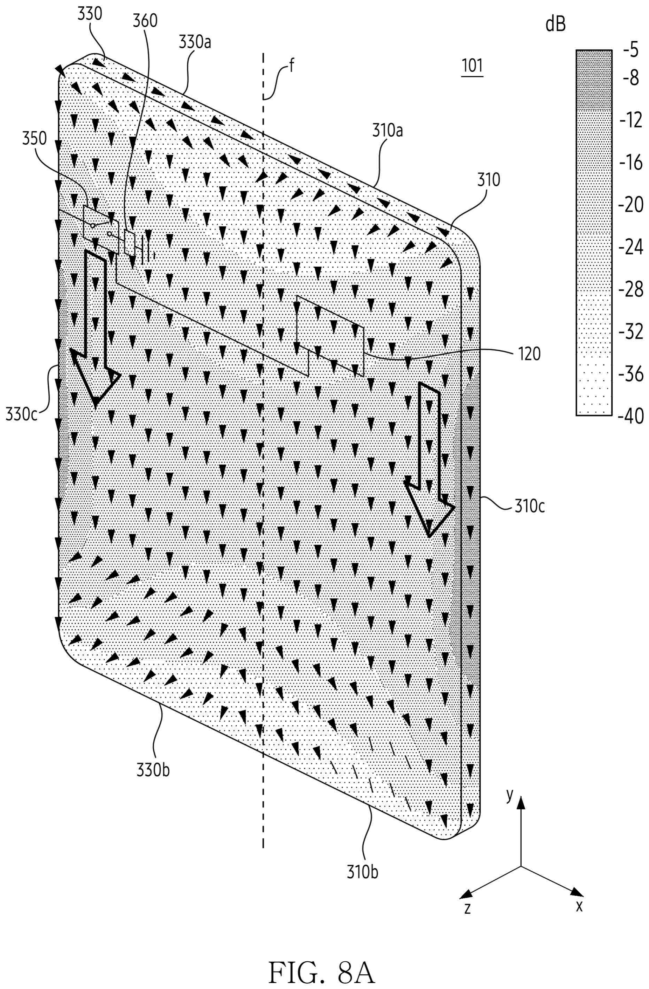

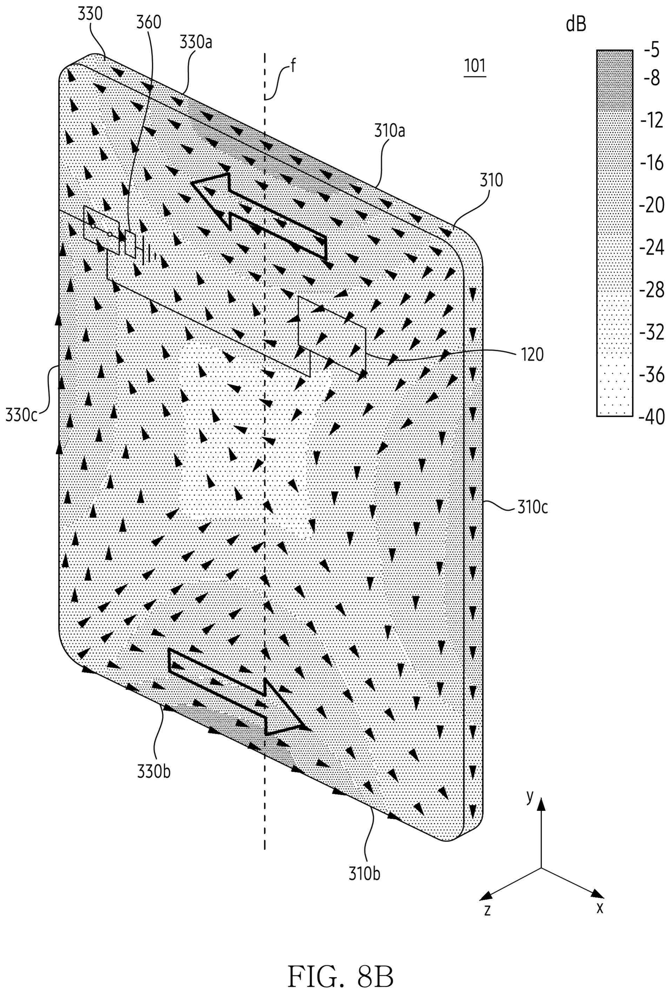

FIG. 8A schematically illustrates a flow of a current formed in an electronic device in an unfolded state, in a first state of a first switch circuit. FIG. 8B schematically illustrates a flow of a current formed in an electronic device in an unfolded state, in a second state of a first switch circuit.

As described above, a first switch circuit 350 may be configured to improve satellite communication performance of an electronic device 101 in a folded state. An operation of the first switch circuit 350 may improve satellite communication performance of the electronic device 101 in an unfolded state as well as the electronic device 101 in the folded state.

For example, FIG. 8A illustrates a mode formed according to a first state in which the first switch circuit 350 is opened, in the unfolded state of the electronic device 101 according to an exemplary embodiment. For example, FIG. 8B illustrates a mode formed according to a second state in which the first switch circuit 350 is closed, in the folded state of the electronic device 101 according to an exemplary embodiment.

Referring to FIG. 8A, in the first state in which the first switch circuit 350 is opened, a second frame 330 and a ground portion G may be electrically isolated. In the first state, a current formed in the electronic device 101 may be formed in a direction substantially parallel to a folding axis f. For example, a dominant flow of current may be formed along a direction substantially parallel to a y-axis.

Referring to FIG. 8B, in the second state in which the first switch circuit 350 is closed, the second frame 330 and the ground portion G may be electrically connected. In the second state, a current formed in the electronic device 101 may be formed in a direction substantially perpendicular to the folding axis f. For example, a dominant flow of current may be formed along a direction substantially parallel to an x-axis.

Comparing FIGS. 8A and 8B, positions at which a current is concentrated may be different according to states of the first switch circuit 350. For example, as illustrated in FIG. 8A, when the first switch circuit 350 is in the first state, a current may be concentrated on a third periphery 310c of a first frame 310 and/or a sixth periphery 330c of the second frame 330. For example, as illustrated in FIG. 8B, when the first switch circuit 350 is in the second state, a current may be concentrated on a top and/or a bottom of the first frame 310 and the second frame 330.

According to an embodiment, at least one processor 120 may be configured to control the first switch circuit 350 to improve the satellite communication performance of the electronic device 101. For example, while the electronic device 101 performs satellite communication, the at least one processor 120 may be configured to control the first switch circuit 350, based on a state having higher upward directivity from among the first state and the second state.

For example, the at least one processor 120 may be configured to control the first switch circuit 350 based on a usage mode in which a user uses the electronic device 101 in the unfolded state. For example, the usage mode may include a landscape mode (or a horizontal mode) and a portrait mode (or a vertical mode).

For example, the landscape mode and the portrait mode may be distinguished based on a direction of the electronic device 101 with respect to a direction of gravitational acceleration. For example, in the unfolded state, the landscape mode may include a state in which long peripheries (e.g., the third periphery 310c and the sixth periphery 330c) are substantially perpendicular to the direction of gravitational acceleration. For example, in the unfolded state, the portrait mode may include a state in which the long peripheries are substantially parallel to the direction of gravitational acceleration. For example, the landscape mode and the portrait mode may be identified through an acceleration sensor of the electronic device 101.

For example, in the landscape mode, a portion of the long peripheries may face an artificial satellite 400. For example, when the user uses the electronic device 101 in the landscape mode, the third periphery 310c may be positioned at a top (or a bottom), and the sixth periphery 330c may be positioned at the bottom (or the top). According to an embodiment, when the electronic device 101 performs satellite communication in the landscape mode, the at least one processor 120 may be configured to control the first switch circuit 350 based on the first state, so that a current may be concentrated on a top of the electronic device 101. For example, the at least one processor 120 may be configured to control the first switch circuit 350 to the first state, based on identifying that the electronic device 101 is in the landscape mode through the acceleration sensor. As illustrated in FIG. 8A, when the first switch circuit 350 is in the first state, the current may be concentrated on the third periphery 310c of the first frame 310 and/or the sixth periphery 330c of the second frame 330. Since the third periphery 310c or the sixth periphery 330c on which the current is concentrated may be positioned at the top, the current may be concentrated on a periphery facing the artificial satellite 400. As the current is concentrated on the periphery facing the satellite 400, the satellite communication performance of the electronic device 101 may be improved.

For example, in the portrait mode, a portion of short peripheries may face the artificial satellite 400. For example, when the user uses the electronic device 101 in the portrait mode, a first periphery 310a and a fourth periphery 330a may be positioned at the top (or the bottom), and a second periphery 310b and a fifth periphery 330b may be positioned at the bottom (or the top). According to an embodiment, when the electronic device 101 performs satellite communication in the portrait mode, the at least one processor 120 may be configured to control the first switch circuit 350 based on the second state, so that a current may be concentrated on the top of the electronic device 101. For example, the at least one processor 120 may be configured to control the first switch circuit 350 to the second state, based on identifying that the electronic device 101 is in the portrait mode through the acceleration sensor. As illustrated in FIG. 8B, when the first switch circuit 350 is in the second state, the current may be concentrated on the first periphery 310a and the fourth periphery 330a of the first frame 310, and the fourth periphery 330a and the fifth periphery 330b of the second frame 330. Since the first periphery 310a, the fourth periphery 330a, or the second periphery 310b, the fifth periphery 330b on which the current is concentrated may be positioned at the top, the current may be concentrated on a periphery facing the satellite 400. As the current is concentrated on the periphery facing the satellite 400, the satellite communication performance of the electronic device 101 may be improved.

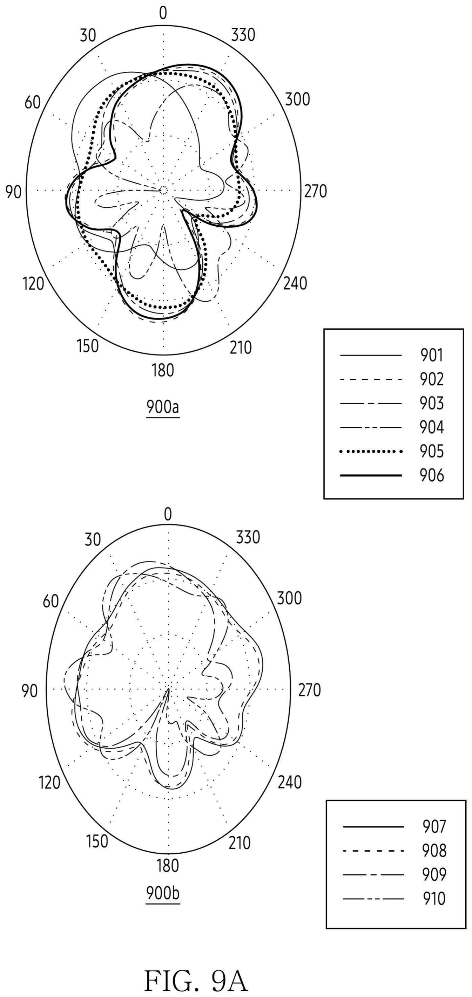

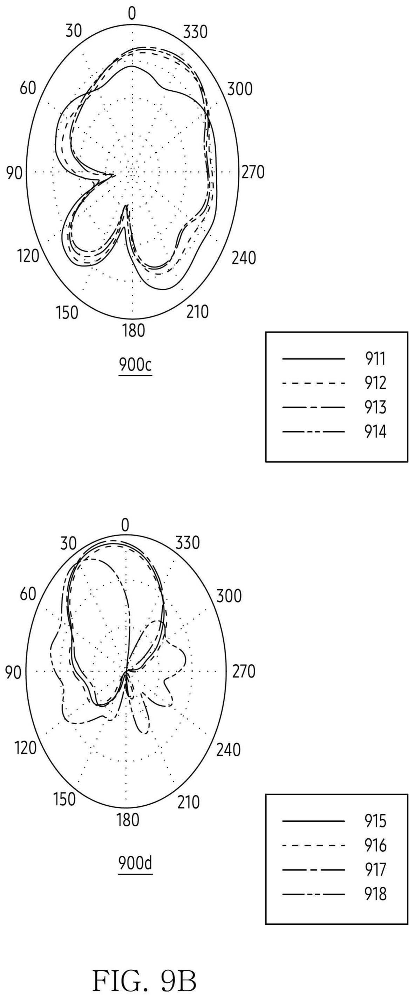

FIG. 9A illustrates a change in a radiation pattern according to an operation of switch circuits in a folded state. FIG. 9B illustrates a change in a radiation pattern according to an operation of switch circuits in an unfolded state.

Referring to FIGS. 9A and 9B, a first switch circuit (e.g., the first switch circuit 350 of FIG. 3A) and a second switch circuit (e.g., the second switch circuit 370 of FIG. 3A) may cause a change in a radiation pattern in a designated frequency band range.

900a of FIG. 9A illustrates a change in a radiation pattern for a signal on mid band (e.g., 1.6 GHz) according to an operation of the first switch circuit 350 and the second switch circuit 370, in a folded state. 900b of FIG. 9A illustrates a change in a radiation pattern for a signal on high band (e.g., 2.5 GHz) according to an operation of the first switch circuit 350 and the second switch circuit 370, in the folded state.

According to an embodiment, in the folded state, a radiation pattern may change according to a parameter value of at least one passive component (e.g., the at least one passive component 360 of FIG. 6A) connected to the first switch circuit 350, and a parameter value of at least one passive component (e.g., the at least one passive component 380 of FIG. 3B) connected to the second switch circuit 370.

Referring to 900a of FIG. 9A, a first pattern 901 may indicate a radiation pattern of an antenna including at least a portion of a first conductive portion (e.g., the first conductive portion 311 of FIG. 3A) for the signal on the mid band, when the first switch circuit 350 is connected to an inductor having a value of 82 nH and the second switch circuit 370 is connected to a capacitor having a value of 3 pF. For example, a second pattern 902 may indicate the radiation pattern when the first switch circuit 350 is connected to an inductor having a value of 3 nH and the second switch circuit 370 is opened. For example, a third pattern 903 may indicate the radiation pattern when the first switch circuit 350 and the second switch circuit 370 are connected to an inductor having a value of 3 nH. For example, a fourth pattern 904 may indicate the radiation pattern when the first switch circuit 350 is connected to an inductor having a value of 3 nH and the second switch circuit 370 is connected to a capacitor having a value of 3 pF. For example, a fifth pattern 905 may indicate the radiation pattern when the first switch circuit 350 is connected to a capacitor having a value of 3 pF and the second switch circuit 370 is opened. For example, a sixth pattern 906 may indicate the radiation pattern when the first switch circuit 350 and the second switch circuit 370 are connected to an inductor having a value of 82 nH.

Referring to 900b of FIG. 9A, a first pattern 907 may indicate a radiation pattern of an antenna including at least a portion of the first conductive portion 311 for the signal on the high band when the first switch circuit 350 and the second switch circuit 370 are opened. For example, a second pattern 908 may indicate the radiation pattern when the first switch circuit 350 is connected to an inductor having a value of 3 nH and the second switch circuit 370 is opened. For example, a third pattern 909 may indicate the radiation pattern when the first switch circuit 350 and the second switch circuit 370 are connected to an inductor having a value of 3 nH. For example, a fourth pattern 910 may indicate the radiation pattern when the first switch circuit 350 is connected to an inductor having a value of 82 nH and the second switch circuit 370 is connected to a capacitor having a value of 3 pF.

Referring to 900a and 900b of FIG. 9A, the first switch circuit 350 and the second switch circuit 370 may be configured to steer a radiation pattern of an antenna for the signal on the mid band (e.g., 1.6 GHz) and the signal on the high band (e.g., 2.5 GHz), in an unfolded state. At least one processor (e.g., the at least one processor 120 of FIG. 3A) may control the first switch circuit 350 and the second switch circuit 370 based on a state having higher upward directivity. According to an embodiment, since the radiation pattern may be steered through the first switch circuit 350 and the second switch circuit 370, an electronic device (e.g., the electronic device 101 of FIG. 3A) may perform satellite communication through a radiation pattern having high upward directivity. According to an embodiment, satellite communication performance of the electronic device 101 may be improved.

According to an embodiment, even in a case of the electronic device 101 in the unfolded state, the radiation pattern may be steered according to the operation of the first switch circuit 350 and the second switch circuit 370.

900c of FIG. 9B illustrates a change in the radiation pattern for the signal on the mid band (e.g., 1.6 GHz) according to an operation of the first switch circuit 350 and the second switch circuit 370 in the unfolded state. 900d of FIG. 9B illustrates a change in the radiation pattern for the signal on the high band (e.g., 2.5 GHz) according to an operation of the first switch circuit 350 and the second switch circuit 370 in the unfolded state.

According to an embodiment, in the unfolded state, a radiation pattern may change according to the parameter value of the at least one passive component 360 connected to the first switch circuit 350 and the parameter value of the at least one passive component 380 connected to the second switch circuit 370.

Referring to 900c of FIG. 9B, for example, a first pattern 911 may indicate a radiation pattern of an antenna including at least a portion of the first conductive portion 311 for the signal on the mid band when the first switch circuit 350 and the second switch circuit 370 are opened. For example, a second pattern 912 may indicate the radiation pattern when the first switch circuit 350 is connected to an inductor having a value of 3 nH and the second switch circuit 370 is opened. For example, a third pattern 913 may indicate the radiation pattern when the first switch circuit 350 is connected to a capacitor having a value of 3 pF and the second switch circuit 370 is opened. For example, a fourth pattern 914 may indicate the radiation pattern when the first switch circuit 350 is connected to a capacitor having a value of 3 pF and the second switch circuit 370 is connected to an inductor having a value of 3 nH.

Referring to 900d of FIG. 9B, for example, a first pattern 915 may indicate a radiation pattern of an antenna including at least a portion of the first conductive portion 311 for the signal on the high band when the first switch circuit 350 and the second switch circuit 370 are opened. For example, a second pattern 916 may indicate the radiation pattern when the first switch circuit 350 is connected to an inductor having a value of 3 nH and the second switch circuit 370 is opened. For example, a third pattern 917 may indicate the radiation pattern when the first switch circuit 350 is connected to a capacitor having a value of 3 pF and the second switch circuit 370 is opened. For example, a fourth pattern 918 may indicate the radiation pattern when the first switch circuit 350 is connected to a capacitor having a value of 3 pF and the second switch circuit 370 is connected to an inductor having a value of 3 nH.

Referring to 900c and 900d of FIG. 9B, the first switch circuit 350 and the second switch circuit 370 may be configured to steer a radiation pattern of an antenna for the signal on the mid band (e.g., 1.6 GHz) and the signal on the high band (e.g., 2.5 GHz), in the folded state. The at least one processor 120 may control the first switch circuit 350 and the second switch circuit 370 based on a state having higher upward directivity. According to an embodiment, since the radiation pattern may be steered through the first switch circuit 350 and the second switch circuit 370, the electronic device 101 may perform satellite communication through a radiation pattern having high upward directivity. According to an embodiment, the satellite communication performance of the electronic device 101 may be improved.

For example, in a situation in which a terrestrial network is not available, the at least one processor 120 may be configured to control the first switch circuit 350 for communication through a non-terrestrial network. For example, the at least one processor 120 may increase upward directivity of a radiation pattern by controlling the first switch circuit 350 based on a state having higher upward directivity from among a first state and a second state. For example, while transmitting and/or receiving a first signal for satellite communication, the at least one processor 120 may be configured to identify a state of the electronic device 101 (e.g., the folded state or the unfolded state). The at least one processor 120 may control the first switch circuit 350 based on the identified state so that the satellite communication performance of the electronic device 101 is improved. For example, when the electronic device 101 is in the folded state, as illustrated in FIGS. 6B and 9A, the at least one processor 120 may steer the radiation pattern by changing the at least one passive component 360 electrically connected to a fourth conductive portion 332. For example, when the electronic device 101 is in the unfolded state, as illustrated in FIG. 9B, the at least one processor 120 may steer the radiation pattern by changing the at least one passive component 360 connected to the fourth conductive portion 332. In a situation in which the terrestrial network is not available, the at least one processor 120 may identify a state having high satellite communication performance based on a position of the electronic device 101 through the first switch circuit 350, and may control the first switch circuit 350 based on the state. According to an embodiment, the electronic device 101 may improve satellite communication performance by steering the radiation pattern, even when a user using the electronic device 101 does not move.

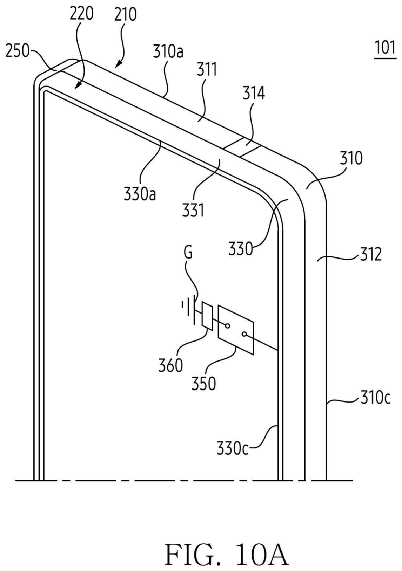

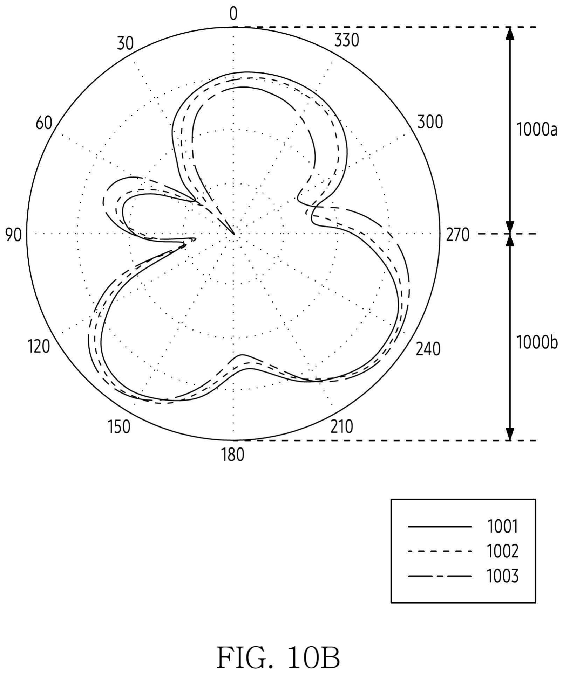

FIG. 10A illustrates a folded state of an electronic device according to an exemplary embodiment. FIG. 10B illustrates a change in a radiation pattern according to an operation of a first switch circuit.

According to an embodiment, a segmented structure of a first frame 310 may be asymmetric with a segmented structure of a second frame 330. For example, in a folded state, a non-conductive portion of a first housing 210 may not be aligned with a non-conductive portion of a second housing 220.

Referring to FIG. 10A, the first frame 310 may include a first conductive portion 311, a second conductive portion 312, and a first non-conductive portion 314. For example, the first conductive portion 311 may be formed along a portion of a first periphery 310a. For example, the first conductive portion 311 may be in contact with a hinge structure 250 and the first non-conductive portion 314 disposed in the first periphery 310a. For example, the second conductive portion 312 may be formed along another portion of the first periphery 310a and a third periphery 310c. For example, an end of the second conductive portion 312 may be in contact with the first non-conductive portion 314. As an electronic device 101 illustrated in FIG. 10A may be substantially the same as the above-described electronic device 101 except for an asymmetric segmented structure, redundant descriptions may be omitted.

According to an embodiment, the second frame 330 may include a third conductive portion 331 facing the first conductive portion 311 and the second conductive portion 312 in the folded state. For example, the third conductive portion 331 may be formed along a fourth periphery 330a and at least a portion of a sixth periphery 330c. A length of the third conductive portion 331 may be longer than a length of the first conductive portion 311. Since the second frame 330 does not include a non-conductive portion facing the first non-conductive portion 314 in the folded state, the segmented structure of the first frame 310 and the segmented structure of the second frame 330 may be asymmetric.

According to an embodiment, a first switch circuit 350 may be configured to electrically connect the third conductive portion 331 and a ground portion G. In a first state in which the first switch circuit 350 is opened, the third conductive portion 331 may be electrically isolated from the ground portion G. In a second state in which the first switch circuit 350 is closed, the third conductive portion 331 may be electrically connected to the ground portion G.

According to an embodiment, the electronic device 101 may include at least one passive component 360 that may be electrically connected to an electrical path between the third conductive portion 331 and the ground portion G. The first switch circuit 350 may be configured to provide an electrical connection between the at least one passive component 360 and the third conductive portion 331.

According to an embodiment, at least one processor 120 may be configured to control the first switch circuit 350 to steer directivity of an antenna including at least a portion of the first conductive portion 311. For example, the at least one processor 120 may be configured to control the first switch circuit 350 based on a state having higher upward directivity from among the first state and the second state. For example, the at least one processor 120 may be configured to control the first switch circuit 350 so that the third conductive portion 331 is connected to the at least one passive component 360.

Referring to FIG. 10B, the radiation pattern of the antenna may be steered based on a parameter value (e.g., capacitance or inductance) of at least one passive component (e.g., the at least one passive component 360 of FIG. 10A) electrically connected to a third conductive portion (e.g., the third conductive portion 331 of FIG. 10A). A first pattern 1001 illustrated in FIG. 10B may indicate the radiation pattern of the antenna including at least a portion of the first conductive portion 311, when an impedance having a value of 2.7 nH is connected to the third conductive portion 331 as the first switch circuit 350 is connected to an inductor having a value of 2.7 nH. A second pattern 1002 may indicate the radiation pattern of the antenna, when an impedance having a value of 3pF is connected to the third conductive portion 331 as the first switch circuit 350 is connected to a capacitor having a value of 3pF. A third pattern 1003 may indicate the radiation pattern of the antenna when the first switch circuit 350 is opened.

Referring to FIG. 10B, the radiation pattern may be steered according to a parameter value electrically connected to the third conductive portion 331 for steering the radiation pattern of the antenna. For example, a radiation pattern in a first area 1000a may be a radiation pattern formed in an upper portion or an upper hemisphere of the electronic device 101, and a radiation pattern in a second area 1000b may be a radiation pattern formed in a lower portion or a lower hemisphere of the electronic device 101. A main lobe of the radiation pattern in the first area 1000a may increase and a side lobe may decrease as the first switch circuit 350 is connected to at least one passive component 360, so that a gain of the antenna may be improved. The at least one processor 120 may change a value of an impedance connected to the third conductive portion 331 by controlling the first switch circuit 350, in order to improve satellite communication performance of the electronic device 101.

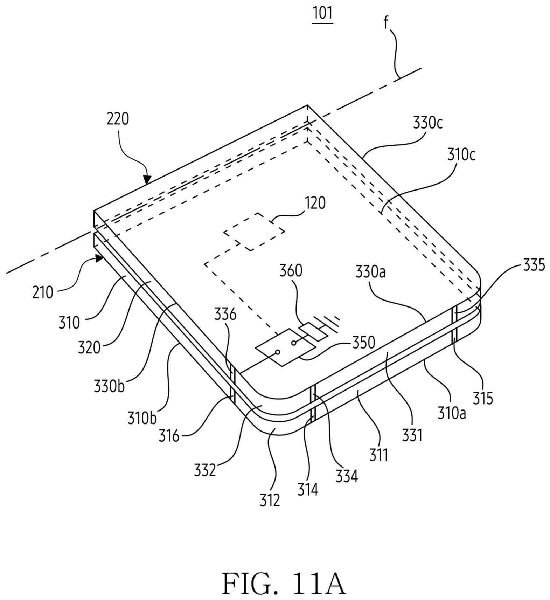

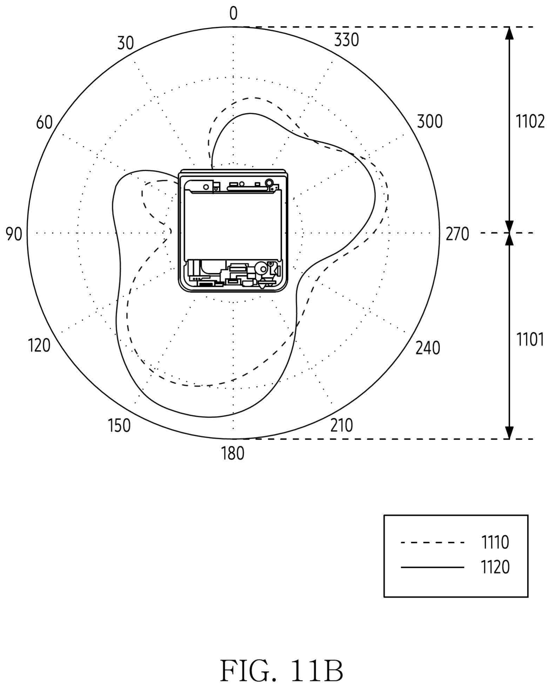

FIG. 11A illustrates a folded state of an electronic device according to an exemplary embodiment. FIG. 11B illustrates a change in a radiation pattern according to an operation of a first switch circuit.

It has been described that the above-described electronic device 101 includes a structure in which a periphery parallel to a folding axis f (e.g., the third periphery 310c of FIG. 3A) is longer than peripheries perpendicular to the folding axis f (e.g., the first periphery 310a and the second periphery 310b of FIG. 3A), but is not limited thereto.

Referring to FIG. 11A, an electronic device 101 according to an embodiment may include a first housing 210 and a second housing 220 rotatably coupled about a folding axis f. For example, a first frame 310 of the first housing 210 may include a first periphery 310a, a second periphery 310b, and a third periphery 310c. The first periphery 310a may be parallel to the folding axis f. The second periphery 310b may be connected to an end of the first periphery 310a and may be perpendicular to the folding axis f. The third periphery 310c may be connected to another end of the first periphery 310a and may be perpendicular to the folding axis f. The second periphery 310b may be opposite to the third periphery 310c. For example, a length of the first periphery 310a may be shorter than a length of the second periphery 310b and a length of the third periphery 310c.

For example, a second frame 330 of the second housing 220 may include a fourth periphery 330a, a fifth periphery 330b, and a sixth periphery 330c. The fourth periphery 330a may be parallel to the folding axis f. The fifth periphery 330b may be connected to an end of the fourth periphery 330a and may be perpendicular to the folding axis f. The sixth periphery 330c may be connected to another end of the fourth periphery 330a and may be perpendicular to the folding axis f. The fifth periphery 330b may be opposite to the sixth periphery 330c. For example, a length of the fourth periphery 330a may be shorter than a length of the fifth periphery 330b and a length of the sixth periphery 330c.

According to an embodiment, the first frame 310 and the second frame 330 may have a segmented structure. For example, the first frame 310 may include a first conductive portion 311 and a second conductive portion 312. For example, the first conductive portion 311 may be formed along a portion of the first periphery 310a. For example, an end of the first conductive portion 311 may be in contact with a first non-conductive portion 314 in the first periphery 310a, and another end of the first conductive portion 311 may be in contact with a second non-conductive portion 315 in the first periphery 310a. For example, the second conductive portion 312 may be formed along another portion of the first periphery 310a and a portion of the second periphery 310b. For example, an end of the second conductive portion 312 may be in contact with the first non-conductive portion 314 in the first periphery 310a, and another end of the second conductive portion 312 may be in contact with a third non-conductive portion 316 in the second periphery 310b.

For example, the second frame 330 may include a third conductive portion 331 and a fourth conductive portion 332. For example, the third conductive portion 331 may be formed along a portion of the fourth periphery 330a. For example, an end of the third conductive portion 331 may be in contact with a fourth non-conductive portion 334 in the fourth periphery 330a, and another end of the third conductive portion 331 may be in contact with a fifth non-conductive portion 335 in the fourth periphery 330a. For example, the fourth conductive portion 332 may be formed along another portion of the fourth periphery 330a and a portion of the fifth periphery 330b. For example, an end of the fourth conductive portion 332 may be in contact with the fourth non-conductive portion 334 in the fourth periphery 330a, and another end of the fourth conductive portion 332 may be in contact with a sixth non-conductive portion 336 in the fifth periphery 330b.

As illustrated in FIG. 11A, the segmented structure of the first frame 310 and the segmented structure of the second frame 330 may be symmetrical. In a folded state, the first conductive portion 311 may face the third conductive portion 331. In the folded state, the second conductive portion 312 may face the fourth conductive portion 332.

According to an embodiment, at least a portion of the first conductive portion 311 may operate as an antenna radiator capable of transmitting and/or receiving a first signal on satellite frequency band. For example, a first switch circuit 350 may be electrically connected to the fourth conductive portion 332 to steer a radiation pattern of an antenna including the antenna radiator.

According to an embodiment, at least one processor 120 may be configured to control the first switch circuit 350 based on a state having higher upward directivity from among a first state and a second state. For example, in the second state in which the first switch circuit 350 is closed, as a dominant flow of current may be formed in a direction parallel to the folding axis f, a current may be concentrated on a top (e.g., the first periphery 310a) of the electronic device 101. Since the current is concentrated on the top of the electronic device 101, upward directivity of the radiation pattern may be increased.

Referring to FIG. 11B, a first area 1101 may indicate a radiation pattern of an upper portion or an upper hemisphere of an electronic device (e.g., the electronic device 101 of FIG. 11A) in a folded state. The second area 1102 may indicate a radiation pattern of a lower portion or a lower hemisphere of the electronic device 101 in the folded state. A first pattern 1110 of FIG. 11B may indicate a radiation pattern of an antenna including at least a portion of a first conductive portion (e.g., the first conductive portion 311 of FIG. 11A) in the first state in which a first switch circuit (e.g., the first switch circuit 350 of FIG. 11A) is opened. A second pattern 1120 may indicate a radiation pattern of the antenna in the second state in which the first switch circuit 350 is closed. For example, in the second state, as the first switch circuit 350 is connected to a capacitor having a value of 3 pF, an impedance of 3 pF may be connected to a fourth conductive portion (e.g., the fourth conductive portion 332 of FIG. 11A).

Comparing the first pattern 1110 and the second pattern 1120, the second pattern 1120 may have higher upward directivity. Since the second pattern 1120 has a higher gain than the first pattern 1110, satellite communication performance of the electronic device 101 may be improved when the first switch circuit 350 is in the second state. According to an embodiment, at least one processor (e.g., the at least one processor 120 of FIG. 11A) may improve the satellite communication performance of the electronic device 101 by controlling the first switch circuit 350 based on the second state while the electronic device 101 performs satellite communication.

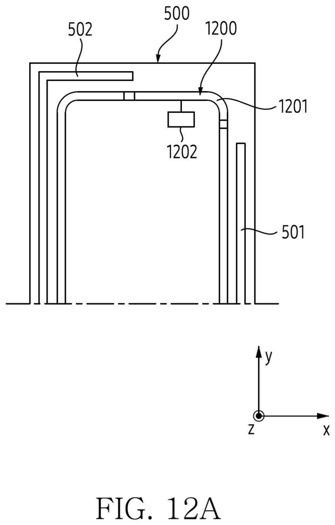

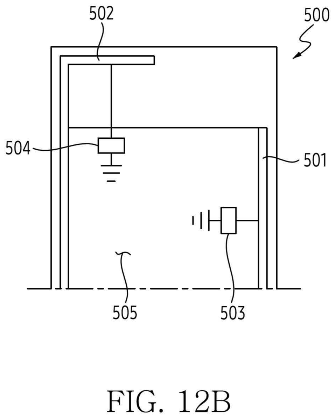

FIG. 12A illustrates an electronic device and an accessory according to an exemplary embodiment. FIG. 12B illustrates an exemplary accessory.

Referring to FIGS. 12A and 12B, an accessory 500 may be coupled to an electronic device 101 in order to improve satellite communication performance of a bar type electronic device 1200. For example, the accessory 500 may include a case that partially surrounds a housing of the bar-type electronic device 101.

Referring to FIG. 12A, the electronic device 101 may include a first conductive portion 1201 used for satellite communication. For example, wireless communication circuitry 1202 may be configured to transmit and/or receive a signal on satellite communication frequency band through at least a portion of the conductive portion 1201. For example, the conductive portion 1201 may be positioned at a top (e.g., a periphery in a +y direction) of the electronic device 1200. The wireless communication circuitry 1202 may transmit and/or receive a signal through the conductive portion 1201.

According to an embodiment, in a state of being coupled to the electronic device 1200, the accessory 500 may include a first conductive portion 501 and/or a second conductive portion 502 for steering a radiation pattern of an antenna including at least a portion of a first conductive portion 1201. For example, while the accessory 500 is coupled to the electronic device 101, the first conductive portion 501 and the second conductive portion 502 may be spaced apart from a portion facing the first conductive portion 1201 of the electronic device 1200.

According to an embodiment, while the electronic device 1200 performs satellite communication through the antenna including at least a portion of the first conductive portion 1201, the first conductive portion 501 and/or the second conductive portion 502 may be connected to a ground area 505. For example, the accessory 500 may include a first switch circuit 503 configured to electrically connect the ground area 505 and the first conductive portion 501 and/or a second switch circuit 504 configured to electrically connect the ground area 505 and the second conductive portion 502. The switch circuits 503 and 504 may steer a radiation pattern of the antenna including the antenna radiator by electrically connecting the first conductive portion 501 and/or the second conductive portion 502 to the ground area 505. For example, the radiation pattern may be changed to have upward directivity by the switch circuits 503 and 504.

According to an embodiment, an electronic device (e.g., the electronic device 101 of FIG. 3A) may include at least one processor (e.g., the at least one processor 120 of FIG. 3A), a first housing (e.g., the first housing 210 of FIG. 3A), a second housing (e.g., the second housing 220 of FIG. 3A), wireless communication circuitry (e.g., the first wireless communication circuitry 192a of FIG. 3A), a printed circuit board (e.g., the second printed circuit board 262 of FIG. 3A), and a first switch circuit (e.g., the first switch circuit 350 of FIG. 3A). The first housing may include a first frame (e.g., the first frame 310 of FIG. 3A). The first frame may include a first conductive portion (e.g., the first conductive portion 311 of FIG. 3A) and a second conductive portion (e.g., the second conductive portion 312 of FIG. 3A) spaced apart from the first conductive portion. The second housing may include a second frame (e.g., the second frame 330 of FIG. 3A). The second frame may include a third conductive portion (e.g., the third conductive portion 331 of FIG. 3A) and a fourth conductive portion (e.g., the fourth conductive portion 332 of FIG. 3A) spaced apart from the third conductive portion. The second housing may be rotatable with respect to the first housing about a folding axis (e.g., the folding axis f of FIG. 3A). The wireless communication circuitry may be configured to transmit or receive a signal on designated frequency band through at least a portion of the first conductive portion. The printed circuit board may be positioned in the second housing. The printed circuit board may include a ground portion (e.g., the ground portion G of FIG. 3A). The first switch circuit may be configured to connect the ground portion and the second frame. The at least one processor may be configured to, while the wireless communication circuitry transmits or receives the signal, control the first switch circuit, based on a state having higher upward directivity, from among a first state in which the second frame is electrically isolated from the ground portion and a second state in which the second frame is electrically connected to the ground portion. According to an embodiment of the present disclosure, the electronic device may include the first switch circuit configured to steer a radiation pattern in order to improve satellite communication performance. For example, in the second state, the first switch circuit may concentrate a current at a top of the electronic device by electrically connecting the first frame and the ground portion. Since an artificial satellite is positioned above the electronic device, the current is concentrated on the top of the electronic device, and thus upward directivity of the radiation pattern may be increased. As upper hemisphere isotropic sensitivity (UHIS) performance of the electronic device is improved when the radiation pattern has upward directivity, the satellite communication performance may be improved.

According to an embodiment, a length of the fourth conductive portion may be equal to or longer than a length of the first conductive portion. According to an embodiment of the present disclosure, since the length of the fourth conductive portion is equal to or longer than a length of the third conductive portion, it may be easy to steer a radiation pattern of an antenna including at least a portion of the first conductive portion.

According to an embodiment, the designated frequency band may comprise satellite communication frequency band. According to an embodiment of the present disclosure, at least a portion of the first conductive portion may operate as an antenna radiator capable of transmitting and/or receiving a satellite communication signal.

According to an embodiment, the first conductive portion may face the third conductive portion, in a folded state in which the first housing and the second housing face each other. The second conductive portion may face the fourth conductive portion, in the folded state. According to an embodiment of the present disclosure, a segmented structure of the first frame and a segmented structure of the second frame may be symmetrical to each other. In the folded state, the symmetrical structure may reduce deterioration of radiation efficiency due to interference by a plurality of conductive portions of the second frame.

According to an embodiment, the first switch circuit may be configured to connect the ground portion and the fourth conductive portion. According to an embodiment of the present disclosure, the fourth conductive portion facing the second conductive portion may be connected to the first switch circuit to steer the radiation pattern of the antenna including at least a portion of the first conductive portion. Since the second conductive portion may operate as an antenna radiator for a legacy network (e.g., low band), it may be longer than the length of the first conductive portion. The length of the fourth conductive portion corresponding to the second conductive portion may be longer than the length of the first conductive portion and the length of the third conductive portion. A current formed in the electronic device may be easily controlled through the relatively long fourth conductive portion.

According to an embodiment, the first housing may include a plurality of non-conductive portions (e.g., the first non-conductive portion 314, the second non-conductive portion 315, and the third non-conductive portion 316 of FIG. 3A) in contact with the first conductive portion or the second conductive portion. The second housing may include a plurality of non-conductive portions (e.g., the fourth non-conductive portion 334, the fifth non-conductive portion 335, and the sixth non-conductive portion 336 of FIG. 3A) in contact with the third conductive portion or the fourth conductive portion. The plurality of non-conductive portions of the first housing may be aligned with the plurality of non-conductive portions of the second housing, in a folded state in which the first housing and the second housing face each other.

According to an embodiment, the first switch circuit may be configured to electrically connect at least one passive component (e.g., the at least one passive component 360 of FIG. 3A) and the second frame. The at least one processor may be configured to adjust a radiation pattern of an antenna including at least a portion of the first conductive portion, by controlling the first switch circuit such that the at least one passive component and the second frame are electrically connected to each other. According to an embodiment of the present disclosure, a radiation pattern may be steered based on an impedance value connected to the second frame through the first switch circuit. The at least one processor may change at least one passive component electrically connected to the second frame through the first switch circuit to improve the satellite communication performance.

According to an embodiment, the electronic device may further include a second switch circuit (e.g., the second switch circuit 370 of FIG. 3A) configured to connect the ground portion and the third conductive portion. The first switch circuit may be configured to connect the ground portion and the fourth conductive portion. According to an embodiment of the present disclosure, the third conductive portion facing the first conductive portion may be electrically connected to the second switch circuit for impedance matching of the antenna including at least a portion of the first conductive portion.

According to an embodiment, the second switch circuit may be configured to electrically connect at least one passive component (e.g., the at least one passive component 380 of FIG. 3A), for adjusting a frequency characteristic of an antenna including at least a portion of the first conductive portion, to the third conductive portion. According to an embodiment of the present disclosure, the second switch circuit may tune a resonant frequency of the antenna including at least a portion of the first conductive portion through the at least one passive component electrically connected to the third conductive portion.

According to an embodiment, the first frame may include a first periphery (e.g., the first periphery 310a of FIG. 3A), a second periphery (e.g., the second periphery 310b of FIG. 3A), and a third periphery (e.g., the third periphery 310c of FIG. 3A). The first periphery may be perpendicular to the folding axis. The second periphery may be opposite to the first periphery. The third periphery may be parallel to the folding axis. The third periphery may be positioned between the first periphery and the second periphery. The second frame may include a fourth periphery (e.g., the fourth periphery 330a of FIG. 3A), the fifth periphery (e.g., the fifth periphery 330b of FIG. 3A), and the sixth periphery (e.g., the sixth periphery 330c of FIG. 3A). The fourth periphery may be perpendicular to the folding axis. The fifth periphery may be opposite to the fourth periphery. The sixth periphery may be parallel to the folding axis. The sixth periphery may be positioned between the fourth periphery and the fifth periphery. The first conductive portion may be positioned at the first periphery. The fourth conductive portion may be at least partially positioned at the sixth periphery. According to an embodiment of the present disclosure, the first conductive portion may be positioned at the top of the electronic device by being positioned at the first periphery. Since the artificial satellite is positioned above the electronic device, the satellite communication performance may be improved when the first conductive portion for transmitting and/or receiving the satellite communication signal is positioned in the first periphery. The fourth conductive portion for steering a radiation pattern may be at least partially positioned in the sixth periphery to secure a length. For example, the fourth conductive portion may be formed along a portion of the third periphery and a portion of the sixth periphery.

According to an embodiment, the first frame may include a first non-conductive portion and a second non-conductive portion that are positioned at the first periphery, and a third non-conductive portion positioned at the third periphery. The second non-conductive portion, at the first periphery, may be spaced apart from the first non-conductive portion toward the third periphery. The first conductive portion may be in contact with the first non-conductive portion and the second non-conductive portion.

According to an embodiment, the second frame may include a fourth non-conductive portion and a fifth non-conductive portion that are positioned at the fourth periphery, and a sixth non-conductive portion positioned at the sixth periphery. The fifth non-conductive portion, at the fourth periphery, may be spaced apart from the fourth non-conductive portion toward the fifth periphery. The fourth conductive portion may be in contact with the fifth non-conductive portion and the sixth non-conductive portion.

According to an embodiment, the first frame may include a first periphery, a second periphery, and a third periphery. The first periphery may be parallel to the folding axis. The second periphery may be perpendicular to the first periphery. The third periphery may be opposite to the second periphery. The second frame may include a fourth periphery, a fifth periphery, and a sixth periphery. The fourth periphery may be parallel to the folding axis. The fifth periphery may be perpendicular to the fourth periphery. The sixth periphery may be opposite to the fifth periphery. The first conductive portion may be located at the first periphery. The second conductive portion may be at least partially positioned at the sixth periphery.

According to an embodiment, the first frame may include a first non-conductive portion and a second non-conductive portion that are positioned at the first periphery, and a third non-conductive portion positioned at the second periphery. The first conductive portion may be in contact with the first non-conductive portion and the second non-conductive portion.

According to an embodiment, an electronic device (e.g., the electronic device 101 of FIG. 3A) may include at least one processor (e.g., the at least one processor 120 of FIG. 3A), a first housing (e.g., the first housing 210 of FIG. 3A), a second housing (e.g., the second housing 220 of FIG. 3A), first wireless communication circuit (e.g., the first wireless communication circuitry 192a of FIG. 3A), second wireless communication circuitry (e.g., the second wireless communication circuitry 192b of FIG. 3A), a printed circuit board (e.g., the second printed circuit board 262 of FIG. 3A), and a first switch circuit (e.g., the first switch circuit 350 of FIG. 3A). The first housing may include a first frame (e.g., the first frame 310 of FIG. 3A). The first frame may include a first conductive portion (e.g., the first conductive portion 311 of FIG. 3A) and a second conductive portion (e.g., the second conductive portion 312 of FIG. 3A) spaced apart from the first conductive portion. The second housing may include a second frame (e.g., the second frame 330 of FIG. 3A). The second frame may include a third conductive portion (e.g., the third conductive portion 331 of FIG. 3A) and a fourth conductive portion (e.g., the fourth conductive portion 332 of FIG. 3A) spaced apart from the third conductive portion. The second housing may be rotatable with respect to the first housing about a folding axis (e.g., the folding axis f of FIG. 3A). The first wireless communication circuitry may be configured to receive or transmit a first signal on first frequency band, through at least a portion of the first conducive portion. The second wireless communication circuit may be configured to transmit or receive a second signal on second frequency band different from the first frequency band, through at least a portion of the second conductive portion. The printed circuit board may be positioned in the second housing. The printed circuit board may include a ground portion (e.g., the ground portion G of FIG. 3A). The first switch circuit may be configured to connect the ground portion and the fourth conductive portion. The first conductive portion may face the third conductive portion, in a folded state in which the first housing and the second housing face each other. The second conductive portion may face the fourth conductive portion, in the folded state.

According to an embodiment, a length of the fourth conductive portion may be equal to or longer than a length of the first conductive portion.

According to an embodiment, the first frequency band may comprise satellite communication frequency band.

According to an embodiment, a length of the first conductive portion may correspond to a length of the third conductive portion. A length of the second conductive portion may correspond to a length of the fourth conductive portion.

The at least one processor may be configured to, while the wireless communication circuitry transmits or receives the signal, control the first switch circuit, based on a state having higher upward directivity, from among a second state in which the second frame is electrically connected from the ground portion and a first state in which the second frame is electrically isolated to the ground portion.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
at least one processor comprising processing circuitry;
memory storing instructions;
a first housing including a first frame, the first frame including:
a first conductive portion, and
a second conductive portion spaced apart from the first conductive portion;
a second housing rotatable with respect to the first housing about a folding axis and including a second frame, the second frame including:
a third conductive portion, and
a fourth conductive portion spaced apart from the third conductive portion;
wireless communication circuitry configured to receive or transmit a signal on designated frequency band, through at least a portion of the first conducive portion;
a printed circuit board (PCB), disposed in the second housing, including a ground portion; and
a first switch circuit configured to connect the ground portion and the second frame, and
wherein the instructions, when executed by the at least one processor, cause the electronic device to, while the wireless communication circuitry transmits or receives the signal, control the first switch circuit, based on a state having higher upward directivity, from among a first state in which the second frame is electrically isolated from the ground portion and a second state in which the second frame is electrically connected to the ground portion.

2. The electronic device of claim 1,
wherein a length of the fourth conductive portion is equal to or longer than a length of the first conductive portion.

3. The electronic device of any one of claim 1 or 2,
wherein the designated frequency band comprises satellite communication frequency band.

4. The electronic device of any one of claims 1 to 3,
wherein the first conductive portion faces the third conductive portion, in a folded state in which the first housing and the second housing face each other, and
wherein the second conductive portion faces the fourth conductive portion, in the folded state.

5. The electronic device of claim 4,
wherein the first switch circuit is configured to connect the ground portion and the fourth conductive portion.

6. The electronic device of any one of claims 1 to 5,
wherein the first housing includes a plurality of non-conductive portions in contact with the first conductive portion or the second conductive portion,
wherein the second housing includes a plurality of non-conductive portions in contact with the third conductive portion or the fourth conductive portion, and
wherein the plurality of non-conductive portions of the first housing are aligned with the plurality of non-conductive portions of the second housing, in a folded state in which the first housing and the second housing face each other.

7. The electronic device of any one of claims 1 to 6,
wherein the first switch circuit is configured to electrically connect at least one passive component and the second frame, and
wherein the instructions, when executed by the at least one processor, cause the electronic device to adjust a radiation pattern of an antenna including at least a portion of the first conductive portion, by controlling the first switch circuit such that the at least one passive component and the second frame are electrically connected to each other.

8. The electronic device of any one of claims 1 to 7, further comprising a second switch circuit configured to connect the ground portion and the third conductive portion.

9. The electronic device of any one of claims 1 to 6,
wherein the first switch circuit is configured to connect the ground portion and the fourth conductive portion.

10. The electronic device of claim 9,
wherein the second switch circuit is configured to electrically connect at least one passive component, for adjusting a frequency characteristic of an antenna including at least a portion of the first conductive portion, to the third conductive portion.

11. The electronic device of any one of claims 1 to 10,
wherein the first frame includes:
a first periphery perpendicular to the folding axis,
a second periphery opposite to the first periphery, and
a third periphery, parallel to the folding axis, positioned between the first periphery and the second periphery,
wherein the second frame includes:
a fourth periphery perpendicular to the folding axis,
a fifth periphery opposite to the fourth periphery, and
a sixth periphery, parallel to the folding axis, positioned between the fourth periphery and the fifth periphery,
wherein the first conductive portion is positioned at the first periphery, and
wherein the fourth conductive portion is at least partially positioned at the sixth periphery.

12. The electronic device of claim 11,
wherein the first frame includes:
a first non-conductive portion and a second non-conductive portion that are positioned at the first periphery, and
a third non-conductive portion positioned at the third periphery,
wherein the second non-conductive portion, at the first periphery, is spaced apart from the first non-conductive portion toward the third periphery, and
wherein the first conductive portion is in contact with the first non-conductive portion and the second non-conductive portion.

13. The electronic device of claim 11 or 12,
wherein the second frame includes:
a fourth non-conductive portion and a fifth non-conductive portion that are positioned at the fourth periphery, and
a sixth non-conductive portion positioned at the sixth periphery,
wherein the fifth non-conductive portion, at the fourth periphery, is spaced apart from the fourth non-conductive portion toward the fifth periphery, and
wherein the fourth conductive portion is in contact with the fifth non-conductive portion and the sixth non-conductive portion.

14. The electronic device of any one of claims 1 to 10,
wherein the first frame includes:
a first periphery parallel to the folding axis,
a second periphery perpendicular to the first periphery, and
a third periphery opposite to the second periphery,
wherein the second frame includes:
a fourth periphery parallel to the folding axis,
a fifth periphery perpendicular to the fourth periphery, and
a sixth periphery opposite to the fifth periphery,
wherein the first conductive portion is positioned at the first periphery, and
wherein the second conductive portion is at least partially positioned at the sixth periphery.

15. The electronic device of claim 14,
wherein the first frame includes:
a first non-conductive portion and a second non-conductive portion that are positioned at the first periphery, and
a third non-conductive portion positioned at the second periphery, and
wherein the first conductive portion is in contact with the first non-conductive portion and the second non-conductive portion.
